(19) Europäisches Patentamt
European Patent Office
Office européen des brevets

(11) **EP 4 474 614 A1**

(12) **EUROPEAN PATENT APPLICATION**
published in accordance with Art. 153(4) EPC

(43) Date of publication:
**11.12.2024 Bulletin 2024/50**

(21) Application number: **22923958.7**

(22) Date of filing: **31.01.2022**

(51) International Patent Classification (IPC):
**E21C 51/00** *(2006.01)*

(52) Cooperative Patent Classification (CPC):
**E21C 51/00**

(86) International application number:
**PCT/JP2022/003702**

(87) International publication number:
**WO 2023/145095 (03.08.2023 Gazette 2023/31)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Takasago Thermal Engineering Co., Ltd.**
**Tokyo 160-0022 (JP)**

(72) Inventors:
• **UCHIDA, Hiroki**
  **Tokyo 160-0022 (JP)**
• **KAWAKAMI, Yoshiaki**
  **Tokyo 160-0022 (JP)**

• **MORITA, Ken**
  **Tokyo 160-0022 (JP)**
• **MATSUKAZE, Narumi**
  **Tokyo 160-0022 (JP)**
• **KATO, Atsushi**
  **Tokyo 160-0022 (JP)**
• **BABA, Daisuke**
  **Tokyo 160-0022 (JP)**
• **TSUMURA, Shugo**
  **Tokyo 160-0022 (JP)**
• **OKA, Takayuki**
  **Tokyo 160-0022 (JP)**

(74) Representative: **Stöckeler, Ferdinand et al**
**Schoppe, Zimmermann, Stöckeler**
**Zinkler, Schenk & Partner mbB**
**Patentanwälte**
**Radlkoferstrasse 2**
**81373 München (DE)**

(54) **WATER SAMPLING DEVICE, WATER SAMPLING METHOD AND WATER ELECTROLYSIS DEVICE**

(57) A water collecting device includes an ice-wall forming part configured to heat the ground to form an ice wall with ice that includes moisture in the ground, and a water collecting part configured to recover a first gas within a region surrounded by the ice wall and collect water from the recovered first gas.

FIG.1

# Description

## Technical Field

The present invention relates to a water collecting device, a water collecting method, and a water electrolysis device.

## Background Art

Patent Document 1 discloses a resource mining method in which a resource buried in sandy soil is mined in a state where the sandy soil is fluidized by blowing a gas into the sandy soil. Patent Document 1 discloses that a hot air is blown onto a block of ice to generate water vapor, where the hot air is hot enough to dissolve the block of ice buried in the sandy soil and vaporize the generated water.

## Citation List

### Patent Document

Patent Document 1: Japanese Unexamined Patent Application Publication No. 2019-148155

## Summary of Invention

### Technical Problem

When resources are recovered from the lunar surface, efficient recovery of the resources using energy as little as possible is desired. Moreover, reduction in a size of a facility for recovering resources at the lunar surface is desired to reduce a transportation cost of the facility to the lunar surface.

The present disclosure provides a technology of efficiently collecting water from the ground, particularly from the ground at the lunar surface. Moreover, the present disclosure provides a technology of processing water collected from the ground.

### Solution to Problem

The present disclosure provides a water collecting device that includes an ice-wall forming part configured to heat the ground to form an ice wall with ice that includes moisture in the ground, and a water collecting part configured to recover a first gas within a region surrounded by the ice wall and collect water from the recovered first gas.

### Advantageous Effects of Invention

The water collecting device and water collecting method of the present disclosure can efficiently collect water from the ground, particularly from the ground on the lunar surface. Moreover, the water collecting device and water collecting method of the present disclosure can process water collected from the ground by the water collecting device and water collecting method.

## Brief Description of Drawing

[Fig. 1] Fig. 1 is a diagram illustrating a schematic configuration of the water collecting device according to a first embodiment.
[Fig. 2] Fig. 2 is a diagram explaining a water-vapor generator of the water collecting device according to the first embodiment.
[Fig. 3] Fig. 3 is a diagram explaining a water-vapor recovery part of the water collecting device according to the first embodiment.
[Fig. 4] Fig. 4 is a diagram explaining the water collecting method using the water collecting device according to the first embodiment.
[Fig. 5] Fig. 5 is a diagram explaining the water collecting method using the water collecting device according to the first embodiment.
[Fig. 6] Fig. 6 is a diagram explaining the water collecting method using the water collecting device according to the first embodiment.
[Fig. 7] Fig. 7 is a diagram explaining the water collecting method using the water collecting device according to the first embodiment.
[Fig. 8] Fig. 8 is a diagram explaining the water collecting method using the water collecting device according to the first embodiment.
[Fig. 9] Fig. 9 is a diagram explaining the water collecting method using the water collecting device according to the first embodiment.
[Fig. 10] Fig. 10 is a diagram explaining the water collecting method using the water collecting device according to the first embodiment.
[Fig. 11] Fig. 11 is a diagram explaining the water collecting method using the water collecting device according to the first embodiment.
[Fig. 12] Fig. 12 is a diagram explaining the water collecting method using the water collecting device according to the first embodiment.
[Fig. 13] Fig. 13 is a diagram explaining formation of an ice wall in the water collecting method using the water collecting device according to the first embodiment.
[Fig. 14] Fig. 14 is a diagram explaining formation of an ice wall in the water collecting method using the water collecting device according to the first embodiment.
[Fig. 15] Fig. 15 is a diagram explaining formation of an ice wall in the water collecting method using the water collecting device according to the first embodiment.
[Fig. 16] Fig. 16 is a diagram illustrating a schematic structure of the water collecting device according to a second embodiment.

[Fig. 17] Fig. 17 is a diagram explaining operation of the water collecting device according to the second embodiment.

[Fig. 18] Fig. 18 is a diagram explaining the operation of the water collecting device according to the second embodiment.

[Fig. 19] Fig. 19 is a diagram explaining the operation of the water collecting device according to the second embodiment.

[Fig. 20] Fig. 20 is a diagram illustrating a schematic configuration of the water collecting device according to a third embodiment.

[Fig. 21] Fig. 21 is a diagram explaining operation of the water collecting device according to a fourth embodiment.

[Fig. 22] Fig. 22 is a diagram explaining the operation of the water collecting device according to the fourth embodiment.

[Fig. 23] Fig. 23 is a diagram explaining the operation of the water collecting device according to the fourth embodiment.

[Fig. 24] Fig. 24 is a diagram explaining the operation of the water collecting device according to the fourth embodiment.

[Fig. 25] Fig. 25 is a diagram explaining formation of an ice wall with the water collecting device according to a fifth embodiment.

[Fig. 26] Fig. 26 is a diagram explaining an outline of the water collecting device according to a sixth embodiment.

[Fig. 27] Fig. 27 is a diagram explaining an outline of a modification example of the water collecting device according to the sixth embodiment.

[Fig. 28] Fig. 28 is a diagram explaining an outline of a modification example of the water collecting device according to the sixth embodiment.

[Fig. 29] Fig. 29 is a diagram explaining an outline of a modification example of the water collecting device according to the sixth embodiment.

[Fig. 30] Fig. 30 is a diagram explaining an outline of a modification example of the water collecting device according to the sixth embodiment.

[Fig. 31] Fig. 31 is a diagram explaining an outline of a modification example of the water collecting device according to the sixth embodiment.

[Fig. 32] Fig. 32 is a diagram explaining an outline of a modification example of the water collecting device according to the sixth embodiment.

[Fig. 33] Fig. 33 is a diagram explaining an outline of the water collecting device according to a seventh embodiment.

[Fig. 34] Fig. 34 is a diagram explaining the outline of the water collecting device according to the seventh embodiment.

[Fig. 35] Fig. 35 is a diagram explaining an amount of water that can be collected by the water collecting device according to the present embodiment at the lunar surface.

[Fig. 36] Fig. 36 is a diagram explaining an amount of water that can be collected by the water collecting device according to the present embodiment at the lunar surface.

[Fig. 37] Fig. 37 is a diagram explaining behavior of an ice wall relative to the water collecting device according to the present embodiment.

[Fig. 38] Fig. 38 is a diagram explaining behavior of an ice wall relative to the water collecting device according to the present embodiment.

[Fig. 39] Fig. 39 is a perspective view of a water electrolysis device according to a first embodiment.

[Fig. 40] Fig. 40 is an exploded perspective view of the water electrolysis device according to the first embodiment.

[Fig. 41] Fig. 41 is a diagram explaining operation of the water electrolysis device according to the first embodiment.

[Fig. 42] Fig. 42 is a diagram explaining the operation of the water electrolysis device according to the first embodiment.

[Fig. 43] Fig. 43 is an exploded perspective view of the water electrolysis device according to a second embodiment.

[Fig. 44] Fig. 44 is an exploded perspective view of the water electrolysis device according to the second embodiment.

[Fig. 45] Fig. 45 is a perspective view of an anode current collector of the water electrolysis device according to the second embodiment.

[Fig. 46] Fig. 46 is a side view of the anode current collector of the water electrolysis device according to the second embodiment.

[Fig. 47] Fig. 47 is an exploded perspective view of the water electrolysis device according to a third embodiment.

[Fig. 48] Fig. 48 is a front view of an anode current collector of the water electrolysis device according to the third embodiment.

[Fig. 49] Fig. 49 is a diagram illustrating a schematic configuration of the water electrolysis device according to a fourth embodiment.

[Fig. 50] Fig. 50 is a diagram illustrating a schematic configuration of the water electrolysis device according to a fifth embodiment.

[Fig. 51] Fig. 51 is a diagram explaining behavior of the water electrolysis device according to the present embodiment.

[Fig. 52] Fig. 52 is a diagram explaining behavior of the water electrolysis device of Comparative Example.

Description of Embodiments

Hereinafter, embodiments will be described with reference to the accompanying drawings. In the description of the specification and the drawings according to each embodiment, components having substantially the same or corresponding functional configurations are denoted by the same reference numerals, and redundant description thereof may be omitted. In addition, for ease of understanding, the scale of each part in the drawings may be different from the actual scale.

<<Water collecting device>>

The present disclosure aims to provide a water collecting device that can efficiently collect water in the ground, particularly in the soil at the lunar surface, over a wide region in an energy saving manner. The lunar surface is covered with gravel called regolith. Ice is included in the ground at the lunar surface. Specifically, ice is included in voids within regolith deposited on the lunar surface. A temperature in the soil at the lunar surface is an extremely low temperature, which is lower than -150°C. In order to collect ice in the ground of the lunar surface by the water collecting device, the ice included in the soil at the lunar surface needs to be heated to melt the ice.

When ice is heated to melt at the lunar surface, it is desired to efficiently heat the ice with low heating energy. However, the atmosphere at the lunar surface is a vacuum, and the voids within the regolith are also in a vacuum state, and therefore a wide region of the regolith cannot be heated only through heat conduction in solids, even if heating is performed using a heater or the like. As ice is heated in the vacuum at the lunar surface, moreover, the ice sublimates into water vapor at around -70°C. As ice sublimates into water vapor, the water vapor diffuses into the vacuum and disappears. In order to recover the water vapor sublimated by heating ice, the ice needs to be sublimated into water vapor, which is to be recovered, within a sealed space so as not to diffuse the water vapor.

The water collecting device according to the present embodiment transfers heat across a large area using a gas. Moreover, the water collecting device according to the present embodiment freezes supplied water vapor or the water vapor obtained by vaporizing ice existing in the regolith to thereby form an ice wall, and recovers the water vapor in a sealed space formed by surrounding the ice wall so that water can be efficiently collected.

<First embodiment>

[Configuration]

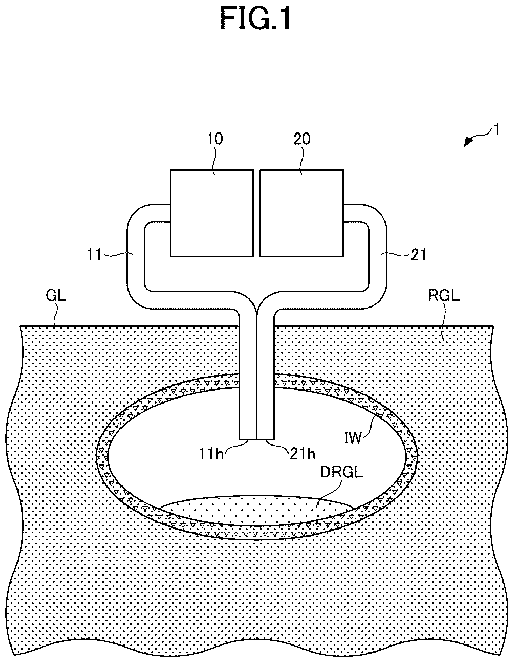

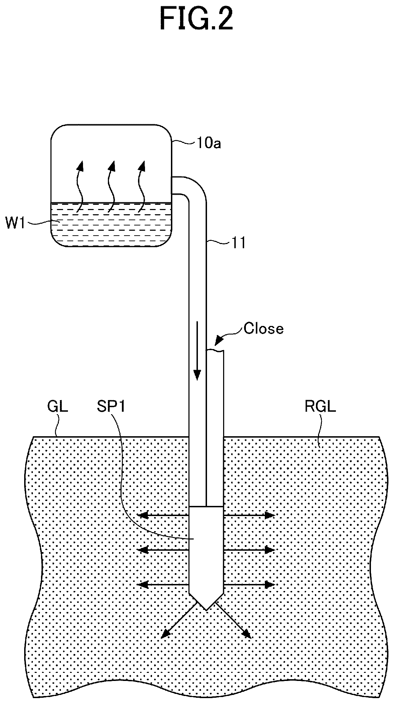

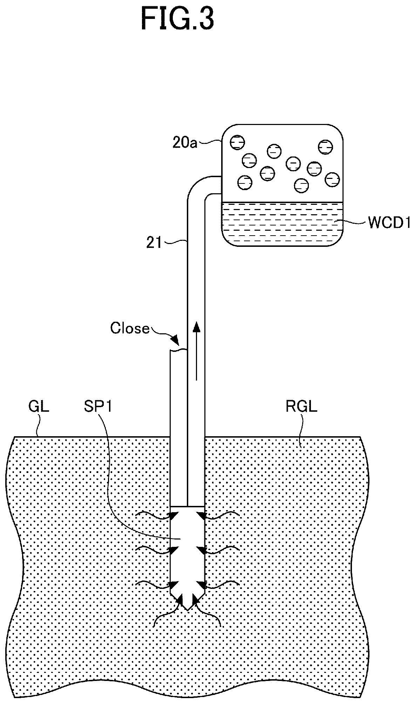

The water collecting device 1 according to the first embodiment will be explained. Fig. 1 is a diagram illustrating a schematic configuration of the water collecting device 1 according to the first embodiment. Fig. 2 is a diagram explaining a water-vapor generator 10 of the water collecting device 1 according to the first embodiment. Fig. 3 is a diagram explaining a water-vapor recovery part 20 of the water collecting device 1 according to the first embodiment.

For example, the water collecting device 1 collects the moisture (ice) included in the regolith at the lunar surface. The water collecting device 1 includes a water-vapor generator 10 and a water-vapor recovery part 20.

(Water-vapor generator 10)

The water-vapor generator 10 is configured to generate water vapor. Moreover, the water-vapor generator 10 supplies the generated water vapor into the soil of the lunar surface, specifically, into the regolith RGL on the ground GL of the lunar surface, via a water-vapor supply pipe 11. The water-vapor supply pipe 11 is inserted into the soil of the lunar surface, specifically, into the regolith RGL at the ground GL of the lunar surface. The water-vapor generator 10 supplies water vapor into the regolith RGL from a water-vapor supply port 11h that is disposed at an edge (tip) of the water-vapor supply pipe 11 on the opposite side to the water-vapor generator 10.

As the water vapor is supplied into the regolith RGL, an ice wall IW is formed to surround the water-vapor supply port 11h in a manner that is described below. Specifically, the water-vapor generator 10 heats the ground (within the regolith RGL) and forms the ice wall IW with ice including the moisture included in the ground (in the regolith RGL).

The water-vapor generator 10 includes a water supply tank 10a. The water supply tank 10a stores water W1. The water-vapor generator 10 evaporates the water W1 stored in the water supply tank 10a to generate water vapor. For example, the water-vapor generator 10 adjusts the inner atmosphere of the water supply tank 10a at the saturated vapor pressure with a temperature of 0°C or higher to generate water vapor. The water-vapor generator 10 supplies the saturated water vapor from the water-vapor supply port 11h into the regolith RGL via the water-vapor supply pipe 11.

(Water-vapor recovery part 20)

The water-vapor recovery part 20 is configured to recover the water vapor from the soil of the lunar surface, specifically, from the regolith RGL at the ground GL of the lunar surface via a water-vapor recovery pipe 21. Moreover, the water-vapor recovery part 20 transforms the recovered water vapor into water to thereby recover the water. The water-vapor recovery pipe 21 is inserted into the soil of the lunar surface, specifically, into the regolith RGL at the ground GL of the lunar surface. The water-vapor recovery part 20 recovers the water vapor in the regolith RGL through a water-vapor recovery port 21h that is disposed at an edge (tip) of the water-vapor recovery pipe 21 on the opposite side to the water-vapor recovery part 20.

The water-vapor recovery part 20 includes a water recovery tank 20a. The water recovery tank 20a condenses the water vapor into water, and stores the water WCD1. The water-vapor recovery part 20 condenses the water vapor recovered in the water recovery tank 20a to generate water. For example, the water-vapor recovery part 20 recovers the water vapor with the inner temperature of the water recovery tank 20a being set at a temperature of lower than 5°C.

The water-vapor recovery port 21h of the water-vapor recovery pipe 21 is surrounded by the ice wall IW. Therefore, the water-vapor recovery part 20 recovers the water vapor existing within the region surrounded by the ice wall IW, and collects water from the recovered water vapor.

Note that, as the wet gas is recovered by the water-vapor recovery part 20, the dried regolith DRGL is deposited inside the space sealed by the ice wall IW.

[Water collecting method]

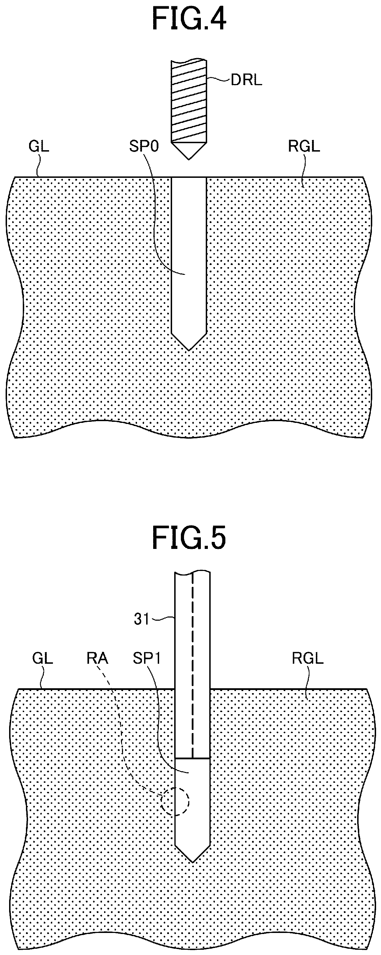

A water collecting method using the water collecting device 1 according to the present embodiment will be explained. Each of Figs. 4 to 12 is a diagram explaining the water collecting method using the water collecting device 1 according to the first embodiment. Steps of the water collecting method according to the present embodiment will be explained with reference to Figs. 4 to 12.

First, a hole is vertically bored into the regolith RGL from the ground GL of the lunar surface by a drill DRL. As the hole is bored into the regolith RGL by the drill DRL, a space SP0 is formed (Fig. 4). A diameter of the drill DRL is slightly larger than a diameter of a below-described water-vapor supply and recovery pipe 31 so that the water-vapor supply and recovery pipe 31 can be inserted into the hole (space SP0) formed by the drill DRL. However, the diameter of the drill DRL is adjusted so that a large amount of water vapor is not leaked from a clearance between the water-vapor supply and recovery pipe 31 and the hole (space SP0).

Next, the water-vapor supply and recovery pipe 31 is inserted into the hole (space SP0) bored into the regolith RGL by the drill DRL (Fig. 5). Specifically, the water-vapor supply and recovery pipe 31 is inserted into the space SP0. A space that extends from an edge of the water-vapor supply and recovery pipe 31 and is not occupied by the water-vapor supply and recovery pipe 31 within the space SP0 is referred to as a space SP1.

Note that, the water-vapor supply and recovery pipe 31 is a pipe in which the above described water-vapor supply pipe 11 and water-vapor recovery pipe 21 are integrated. Specifically, the water-vapor supply and recovery pipe 31 is a pipe in which the water-vapor supply pipe 11 and the water-vapor recovery pipe 21 constitute an integrated structure. For example, the water-vapor supply and recovery pipe 31 may be divided into two, where one half is coupled to the water-vapor generator 10 and the other half is coupled to the water-vapor recovery part 20. In Fig. 5 and the like, the division of the water-vapor supply and recovery pipe 31 is indicated with a dashed line. In Fig. 5 and the like, a left side from the dashed line is coupled to the water-vapor generator 10, and a right side from the dashed line is coupled to the water-vapor recovery part 20.

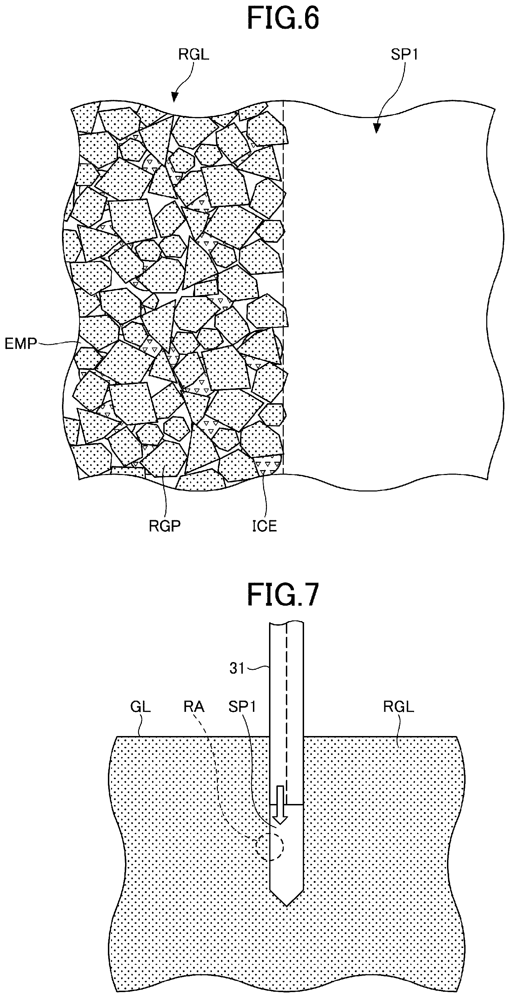

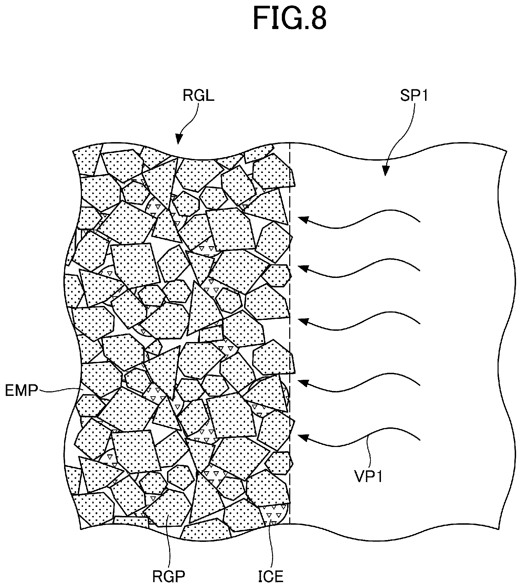

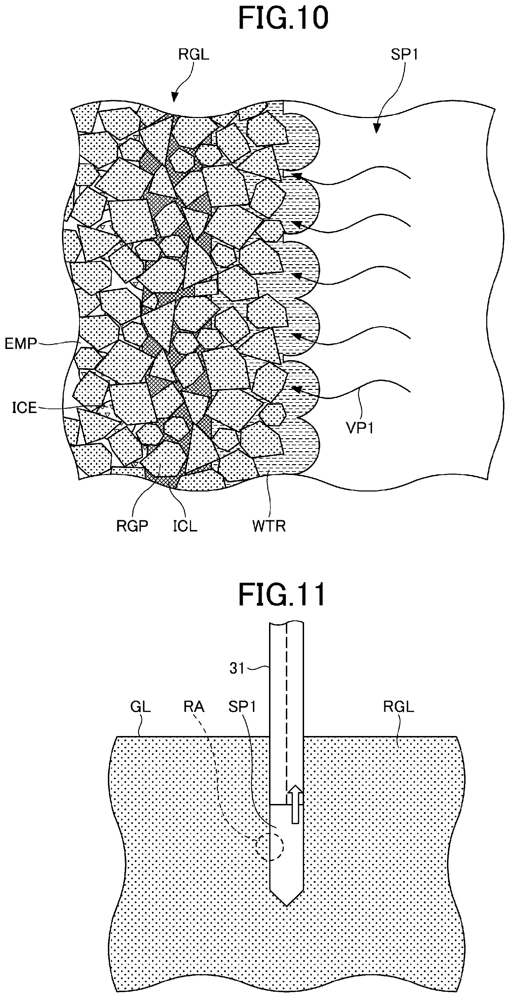

An enlarged view of the region RA in Fig. 5 is illustrated in Fig. 6. Note that, each of Figs. 8, 9, 10, and 12 is similarly an enlarged view of the region RA in Fig. 7 or 11.

The portion of the regolith RGL of Fig. 6 illustrates a state of the regolith RGL at the lunar surface. In the regolith RGL, fine particles RGP are deposited. The regolith RGL is a porous body including voids EMP between the fine particles RGP. The voids EMP between the fine particles RGP are vacuumed. A porosity of the regolith RGL is, for example, from 30% by volume to 60% by volume. Ice ICE is included in some of the voids EMP between the fine particles RGP. Note that, a temperature of the regolith RGL is extremely low, approximately -273°C.

Next, the water-vapor generator 10 supplies water vapor to the space SP1 via the water-vapor supply and recovery pipe 31 (Fig. 7). For example, the water-vapor generator 10 supplies saturated water vapor having a temperature of 20°C and pressure of 2340 Pa to the space SP1. As described above, the regolith RGL is a porous body having a porosity of approximately 30% by volume to approximately 60% by volume. Therefore, the water vapor VP1 supplied from the water-vapor supply and recovery pipe 31 is diffused while flowing through the voids EMP between the fine particles RGP (Fig. 8).

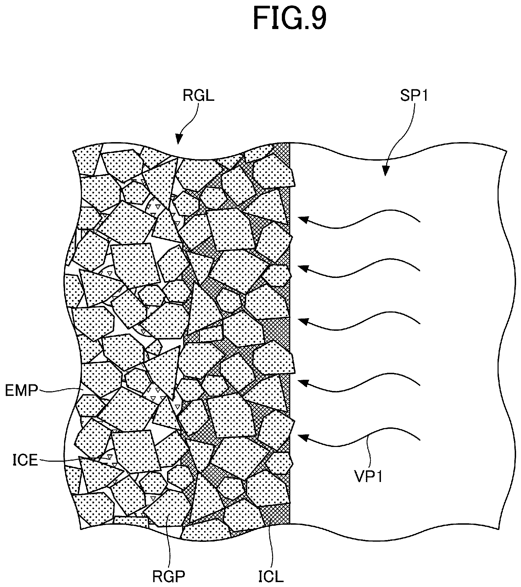

The temperature of the regolith RGL is -200 °C or lower, which is extremely low. Therefore, the water vapor VP1 supplied from the water-vapor supply and recovery pipe 31 is solidified and frozen to form an ice layer ICL at a very close distance after entering the regolith RGL (Fig. 9). More specifically, the water vapor VP1 is condensed on a surface of the regolith RGL facing the space SP1. As the temperature of the regolith RGL is 0°C or lower, the water vapor VP1 is solidified and frozen. The voids EMP in the regolith RGL, which is a porous body, are filled with the frozen ice to form an ice layer ICL separating the space SP1, which is the hole formed by the drill, from the inner area of the regolith RGL.

Note that, the ice layer ICL is formed of the water vapor supplied from the water-vapor generator 10 and the moisture (ice ICE) included in the regolith RGL. Specifically, the ice wall IW formed with the ice layer ICL includes the moisture included in the regolith RGL.

Moreover, as the water vapor VP1 is supplied to the surface of the ice layer ICL facing the space SP1, the surface of the ice layer ICL facing the space SP1 is heated. As the surface of the ice layer ICL facing the space SP1 is heated, part of the ice layer ICL is melted. As part of the ice layer ICL facing the space SP1 is melted, water WTR is generated (Fig. 10). Moreover, an opposite side of the ice layer ICL to the space SP1 grows toward the inner side of the regolith RGL of a low temperature and a low pressure. When the opposite side of the ice layer ICL to the space SP1 grows toward the inner side of the regolith RGL of a low temperature and low pressure, ice ICE inside the regolith RGL is incorporated into the ice layer ICL.

The ice layer ICL is formed to surround the space SP1. Even if part of the ice layer ICL may have a hole and the space SP1 is not completely surrounded by the ice layer ICL, the water vapor VP1 selectively flows toward the location of the hole. As the water vapor VP1 selectively flows toward the location of the hole, the water vapor VP1 is frozen to fill the hole. As the ice layer ICL is formed to surround the space SP1, the space SP1 inside the ice layer ICL is separated from the regolith RGL to create a sealed space.

If a thickness of the ice layer ICL is 5 mm or greater, the interior of the ice layer ICL with water vapor pressure (for example, a pressure of 900 Pa) at a temperature of approximately 5°C can be separated from the soil (regolith RGL) at the ground GL of the moon. Whether or not an ice wall (ice layer ICL) is completed can be detected by measuring the pressure at the water-vapor supply port.

By setting the maximum temperature and the maximum saturated vapor pressure of the water vapor generated by the water-vapor generator 10 at 5°C and 900 Pa, respectively, the water-vapor generator 10 injects the water vapor from the water-vapor supply and recovery pipe 31. When the pressure at the water-vapor supply port reaches 900 Pa, the water-vapor generator 10 stops supplying the water vapor. Then, the water collecting device 1 closes a valve disposed in the water-vapor supply pipe 11.

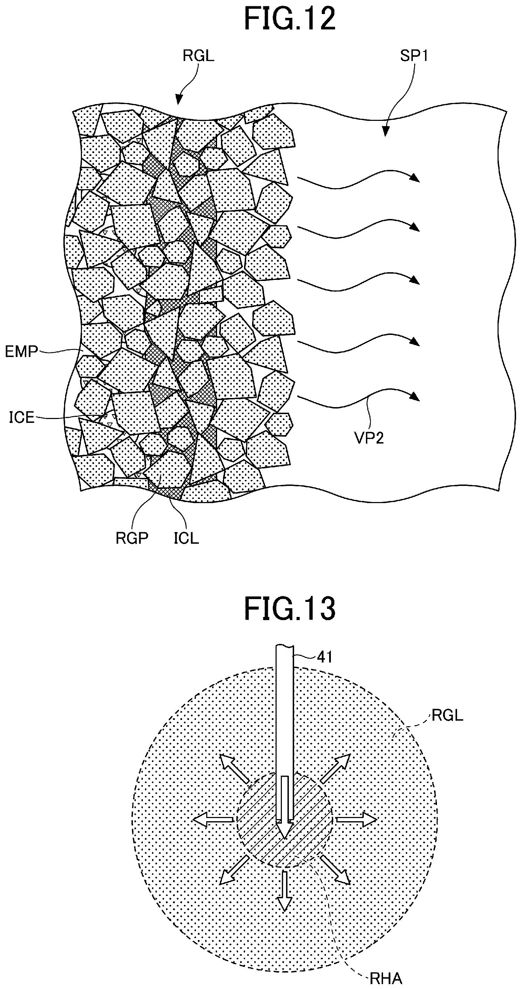

Next, a valve disposed in the water-vapor recovery pipe 21 is opened, and the water vapor VP2 inside the sealed space surrounded by the ice wall (ice layer ICL) is recovered from the water-vapor recovery port 21h to the water-vapor recovery part 20 (Fig. 11). For example, the inside of the water recovery tank 20a is cooled to a temperature lower than 5°C. As the water recovery tank 20a is cooled, the saturated water vapor, which is in the sealed space surrounded by the ice layer ICL in the soil of the lunar surface, is flowed into the water-vapor recovery part 20 (Fig. 12). For example, the water WTR precipitated on the surface of the ice layer ICL facing the space SP1 is recovered as the water vapor VP2. An amount of the recoverable water vapor is an amount of water included in the soil of the lunar surface, in addition to the amount of the water vapor supplied into the lunar surface. The water vapor VP2 is one example of the first gas.

For example, the saturated water vapor pressure at a temperature of -50°C is approximately 5 Pa. By setting the temperature inside the water recovery tank 20a at -50°C, the water vapor inside the soil of the lunar surface having the pressure of 900 Pa is flowed into and recovered by the water vapor collecting device.

[Formation of ice wall]

Formation of an ice wall IW will be explained.

Each of Figs. 13 to 15 is a diagram explaining formation of the ice wall IW in the water collecting method using the water collecting device 1 according to the first embodiment.

A water-vapor supply pipe 41 is inserted into the regolith RGL from the ground to a depth of about 1 meter. High-temperature water vapor RHA is injected from a water-vapor intake port of a water-vapor supply pipe 41 (Fig. 13). The ice in the vicinity of the water-vapor intake port of the water-vapor supply pipe 41 is sublimated, and the generated water vapor travels toward the outer side, which is at lower pressure (vacuum), together with the high-temperature water vapor RHA. Specifically, the high-temperature water vapor RHA flows outward in the sphere in which the water-vapor intake port of the water-vapor supply pipe 41 is set as a center.

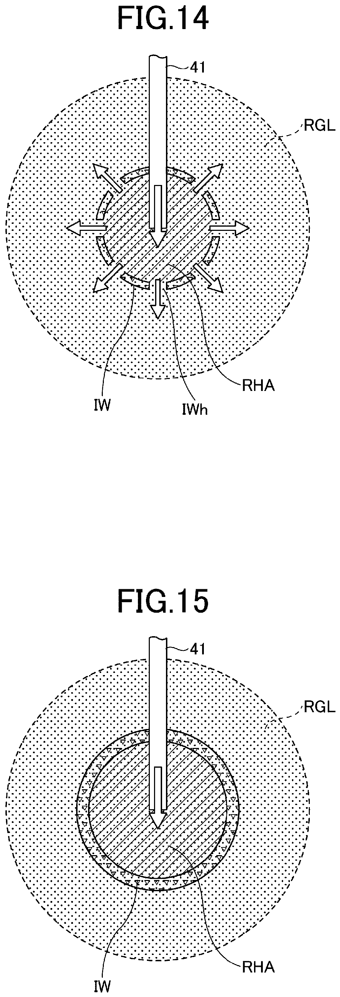

The water vapor that travels toward the outer side from the water-vapor supply pipe 41 is cooled to be solidified and frozen. Specifically, an ice wall IW is formed. The formed ice wall constitutes a spherical shell with the water-vapor intake port of the water-vapor supply pipe 41 as a center. Note that, even in a case where the ice wall IW is not a complete spherical shell and includes a hole IWh, the high-temperature water vapor RHA selectively flows toward the location of the hole IWH and the selectively flowed high-temperature water vapor RHA is frozen to fill the hole IWh (Fig. 14). The ice wall IW is grown thick by continuing to supply the high-temperature water vapor RHA. In a case where there is not sufficient moisture to form an ice wall IW at an initial stage of the formation of the ice wall IW, for example, a larger amount of water vapor is supplied from a heated pipe. Then, the ice wall IW of the spherical shell is formed in the regolith RGL (Fig. 15).

During formation of the ice wall IW, a high-temperature dried gas, such as a high-temperature nitrogen gas, may be supplied, instead of water vapor, to form the ice wall IW. Specifically, while melting the ice in the regolith RGL by supplying the high-temperature gas, the ice wall IW may be formed using the water of the melted ice. Note that, particularly in a case where there is not sufficient water for forming an ice wall IW at the initial stage of the ice wall IW, water vapor may be supplied.

Note that, the water-vapor generator 10 is one example of the ice-wall forming part, and the water-vapor recovery part 20 is one example of the water collecting part.

<Second embodiment>

The water collecting device 1 according to the first embodiment supplies water vapor from the water-vapor generator 10 to the regolith RGL, and recovers the water together with the water pre-existing in the regolith RGL. The water collecting device 2 according to the second embodiment sufficiently heats an inside of a sealed space formed in the regolith RGL so that water is more efficiently heated and recovered. The water collecting device 2 according to the second embodiment sends a high-temperature gas to the sealed space in the regolith RGL and recovers water within the sealed space in the regolith RGL.

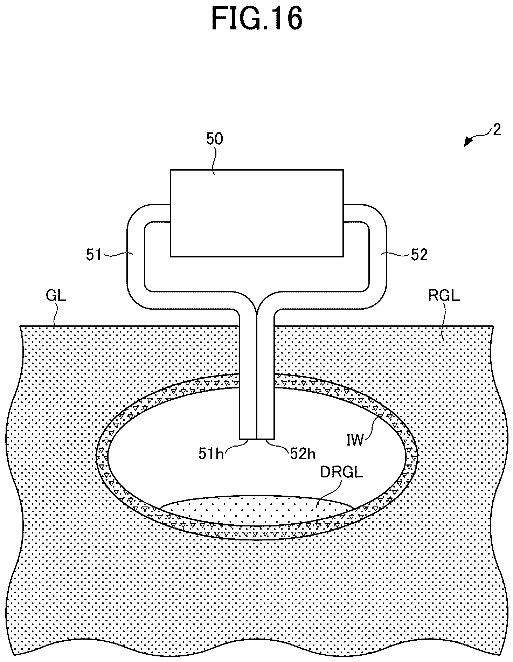

For example, the water collecting device 2 recovers moisture (ice) included in the regolith at the lunar surface. Fig. 16 is a diagram illustrating a schematic configuration of the water collecting device 2 according to the second embodiment.

The water collecting device 2 includes a gas supply and recovery part 50. The gas supply and recovery part 50 supplies a gas dried at a high temperature, such as a nitrogen gas, to a sealed space formed by an ice wall IW formed within the regolith RGL below the ground GL via a gas supply port 51h of the gas supply pipe 51. Moreover, the gas supply and recovery part 50 recovers a gas, which is wet and of a low temperature, such as a nitrogen gas, from the sealed space formed by the ice wall IW formed within the regolith RGL via a gas recovery port 52h of a gas recovery pipe 52. Note that, the gas that is dried at a high temperature and is supplied by the gas supply and recovery part 50 is one example of the second gas.

Once the ice wall IW is formed within the regolith RGL, the water collecting device 2 supplies a gas dried at a high temperature from the gas supply and recovery part 50 to heat an interior of the ice wall IW. Then, the water collecting device 2 recovers a gas of a low temperature and high humidity from the gas supply and recovery part 50. The gas includes the water vapor generated by heating the ice wall IW. The gas supply and recovery part 50 recovers water from the recovered gas of a low temperature and high humidity, and includes the water vapor. As described above, the water collecting device 2 alternately repeats supply of a high-temperature dry gas, and recovery of a low-temperature high-humidity gas.

As the wet gas is recovered by the gas supply and recovery part 50, dried regolith DRGL is deposited inside the sealed space.

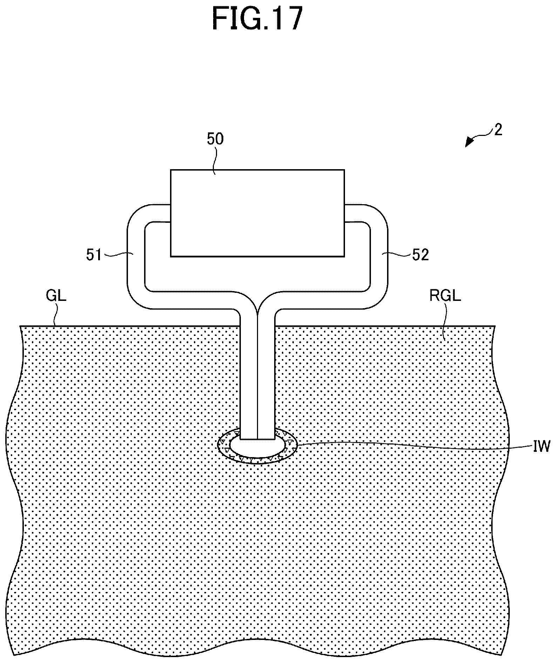

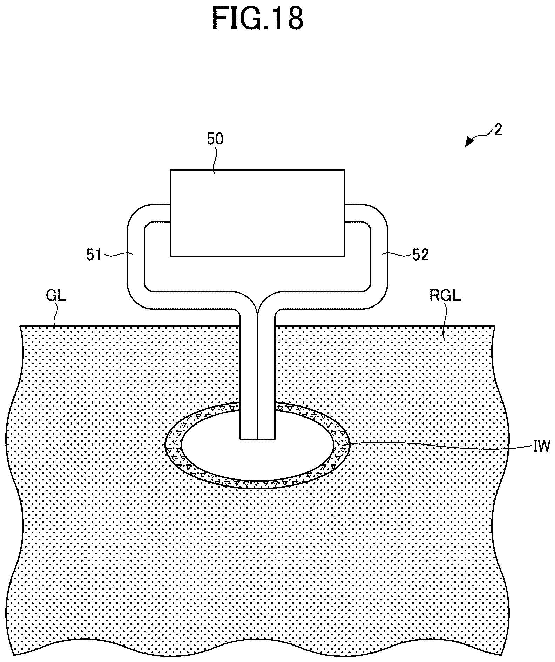

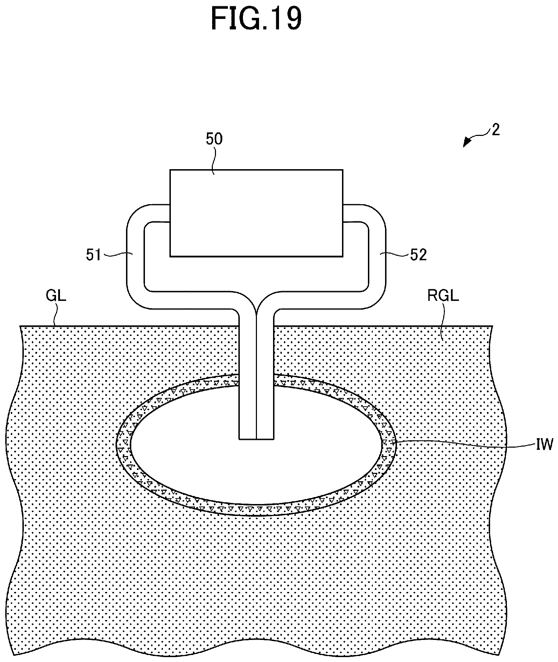

As the water collecting device 2 supplies a high-temperature gas from the gas supply and recovery part 50, the inner surface of the ice wall IW is melted, and at the same time, the ice wall IW is heated by vapor convection. As the ice wall IW is heated, the ice wall IW spreads in the direction moving away from the gas supply pipe 51, while melting the moisture (ice) included in the regolith RGL present outside of the ice wall IW. As illustrated in Figs. 17 to 19, the ice wall IW becomes larger as the water collecting device 2 according to the second embodiment alternately repeats supply of a high-temperature dry gas and recovery of a low-temperature high-humidity gas.

As the ice wall IW is grown bigger by the water collecting device 2, water (ice) included in the regolith RGL is incorporated into the ice wall. As the moisture is recovered by melting the inner surface of the ice wall IW, the moisture included in the regolith RGL can be recovered.

The gas supply and recovery part 50 recovers the gas present within the region surrounded by the ice wall IW and collects water from the recovered gas. The gas supply and recovery part 50 is one example of the water collecting part.

In a case where a sufficient amount of moisture is included in the regolith RGL, a gas dried at a high temperature is supplied from the gas supply and recovery part 50 via the gas supply pipe 51 to vaporize the ice within the regolith RGL, and the resultant water vapor may be frozen again to form an ice wall IW. In this case, the gas supply and recovery part 50 is one example of the ice-wall forming part and the water collecting part.

<Third embodiment>

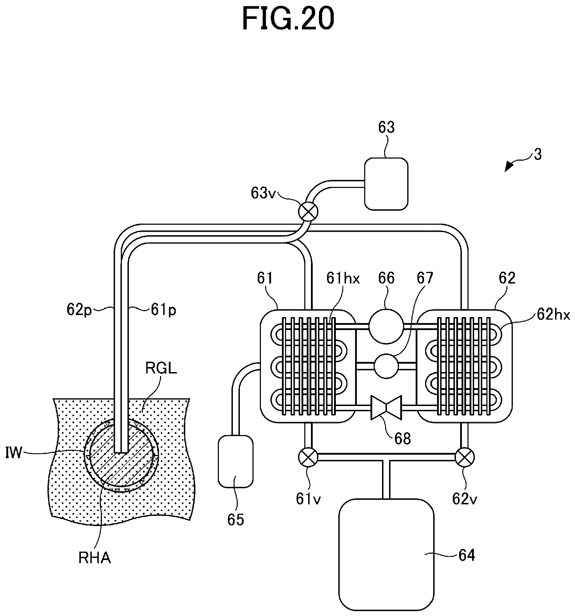

The water collecting device 3 according to the third embodiment performs formation of an ice wall IW and recovery of water (ice) existing at the lunar surface. Fig. 20 is a diagram illustrating a schematic configuration of the water collecting device 3 according to the third embodiment.

The water collecting device 3 includes a heating part 61, a cooling part 62, a water-vapor supply part 63, a water storage 64, and a gas supply part 65.

The heating part 61 includes a heat exchanger 61hx. Moreover, the cooling part 62 includes a heat exchanger 62hx. One end of a pipe constituting the heat exchanger 61hx and one end of a pipe constituting the heat exchanger 62hx are coupled to a compressor 66. The other end of the pipe constituting the heat exchanger 61hx and the other end of the pipe constituting the heat exchanger 62hx are coupled to an expansion valve 68. As the compressor 66 is operated, the heat exchanger 61hx functions as a condenser. As the compressor 66 is operated, moreover, the heat exchanger 62hx functions as an evaporator.

The heating part 61 and the cooling part 62 are coupled to each other via a blower 67. The blower 67 sends a gas, which is cooled by the heat exchanger 62hx disposed in the cooling part 62, to the heat exchanger 61hx disposed in the heating part 61. The gas sent to the heat exchanger 61hx is supplied to the regolith RGL via the gas supply pipe 61p. Moreover, the gas from the regolith RGL is recovered to the cooling part 62 via the gas recovery pipe 62p.

The heat exchanger 61hx functions as a condenser. Therefore, the gas sent to the heat exchanger 61hx is heated. The air heated by the heating part 61 is supplied to the regolith RGL. The gas supplied to the regolith RGL is recovered and cooled by the cooling part 62. Moreover, the heat exchanger 62hx functions as an evaporator. Accordingly, the gas sent to the heat exchanger 62hx is cooled. As the gas is cooled at the cooling part 62, the moisture in the gas is condensed and the moisture is removed from the gas. Specifically, the cooling part 62 recovers water vapor in the region surrounded by the ice wall IW, and collects water from the recovered water vapor. The dry air remaining after removing the moisture is supplied to the heating part 61.

The water-vapor supply part 63 supplies water vapor to the regolith RGL. An ice wall IW is formed with the water vapor supplied by the water-vapor supply part 63. Specifically, the water-vapor supply part 63 heats a region within the ground (within the regolith RGL) and forms an ice wall IW with ice including the moisture included in the region within the ground (within the regolith RGL).

The water storage 64 stores water precipitated from the recovered gas.

The gas supply part 65 supplies a gas to be sent by the blower 67. The gas is, for example, a nitrogen gas.

Note that, the water-vapor supply part 63 is one example of the ice-wall forming part, and the cooling part 62 is one example of the water collecting part. In a case where a sufficient amount of moisture is included in the regolith RGL, a gas dried at a high temperature is supplied from the heating part 61 via the gas supply pipe 61p to vaporize ice within the regolith RGL, and the resultant water vapor may be frozen again to form an ice wall IW. In this case, the heating part 61 is one example of the ice-wall forming part. Moreover, an ice wall may be formed by a combination of the heating part 61 and the water-vapor supply part 63.

<Fourth embodiment>

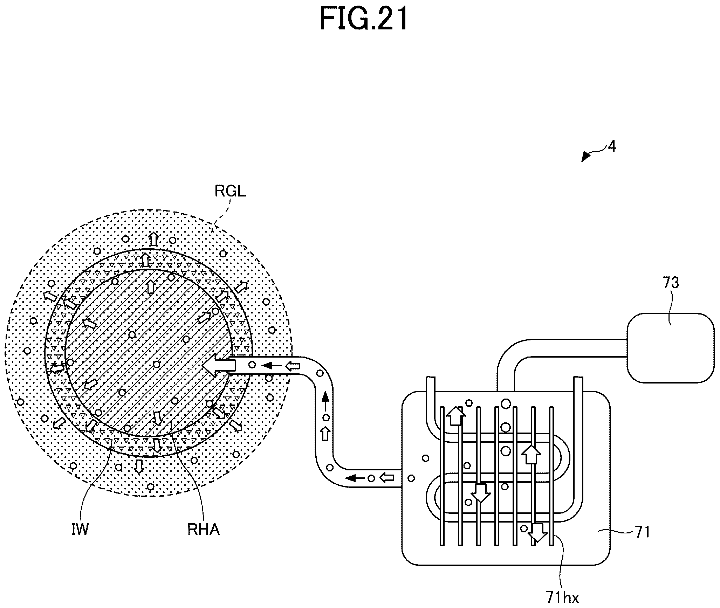

The water collecting device 4 according to the fourth embodiment forms an ice wall IW and recovers water (ice) existing at the lunar surface. A configuration of the water collecting device 4 according to the fourth embodiment will be explained, while explaining the operation of the water collecting device 4, with reference to Figs. 21 to 24. Note that, in Figs. 21 to 24, each white arrow indicates a flow of heat, and each arrowed line indicates a flow of a gas.

The water collecting device 4 includes a heating part 71, a cooling part 72, a water supply part 73, a water storage 74, and a gas supply part 75.

The heating part 71 includes a heat exchanger 71hx. Moreover, the cooling part 72 includes a heat exchanger 72hx. One end of a pipe constituting the heat exchanger 71hx and one end of a pipe constituting the heat exchanger 72hx are coupled to a compressor 76. The other end of the pipe constituting the heat exchanger 71hx and the other end of the pipe constituting the heat exchanger 72hx are coupled to an expansion valve 78.

The compressor 76 is operated in two operation modes, that is, a first mode where a compressed refrigerant is supplied to the heat exchanger 71hx and a second mode where a compressed refrigerant is supplied to the heat exchanger 72hx. As the compressor 76 is operated in the first mode, the heat exchanger 71hx functions as a condenser. As the compressor 76 is operated in the first mode, moreover, the heat exchanger 72hx functions as an evaporator. As the compressor 76 is operated in the second mode, the heat exchanger 71hx functions as an evaporator. As the compressor 76 is operated in the second mode, moreover, the heat exchanger 72hx functions as a condenser.

(Supply of water vapor to regolith RGL)

First, the water collecting device 4 supplies water vapor to the regolith RGL to form an ice wall IW (Fig. 21).

The water supply part 73 supplies water to the heating part 71. When the compressor 76 is operated in the first mode, the heat exchanger 71hx functions as a condenser. As water is supplied from the water supply part 73 to the heat exchanger 71hx functioning as the condenser, the water is vaporized to generate water vapor in the heat exchanger 71hx. The water vapor generated in the heat exchanger 71hx is supplied to the regolith RGL.

The high-temperature water vapor supplied from the heating part 71 to the regolith RGL is condensed and solidified in the regolith RGL to form an ice wall IW. Specifically, the heating part 71 heats the region within the ground (within the regolith RGL) and forms an ice wall IW with ice including moisture included in the region within the ground (within the regolith RGL). Note that, RHA indicates a region to which a high-temperature gas is supplied. As high-temperature water vapor is supplied from the heating part 71 in a state where an ice wall IW is formed, an inner surface of the ice wall IW is heated. Since the water vapor is condensed and solidified at the inner surface side of the ice wall IW, the ice wall IW can be efficiently heated. Moreover, the ice wall IW grows toward both the outer surface side and the inner surface side.

In Fig. 21, water vapor is used as a heating medium. Heat transfer between the heating medium and the regolith RGL or the ice wall IW is achieved by latent heat of condensation and solidification. The water vapor serving as the heating medium is supplied from the heating part 71 to the regolith RGL and the ice wall IW due to a difference in saturated vapor pressure between the interior of the heating part 71 and the regolith RGL or the ice wall IW.

As the water vapor is supplied from the heating part 71 to the regolith RGL, a spherical shell of the ice wall IW is formed, and the spherical shell of the ice wall IW can be enlarged. As the water vapor is supplied from the heating part 71 to the regolith RGL, moreover, the thickness of the ice wall IW can be increased. As the water vapor is supplied from the heating part 71 to the regolith RGL, furthermore, even if there is a hole in the spherical shell of the ice wall IW, the water vapor is selectively supplied to the hole so that the hole can be filled.

In a case where a sufficient amount of moisture is included in the regolith RGL, a gas dried at a high temperature is supplied from the heating part 71 via the gas supply pipe 71p to vaporize the ice within the regolith RGL, and the resultant water vapor may be frozen again to form an ice wall IW.

(Supply of high-temperature gas to regolith RGL)

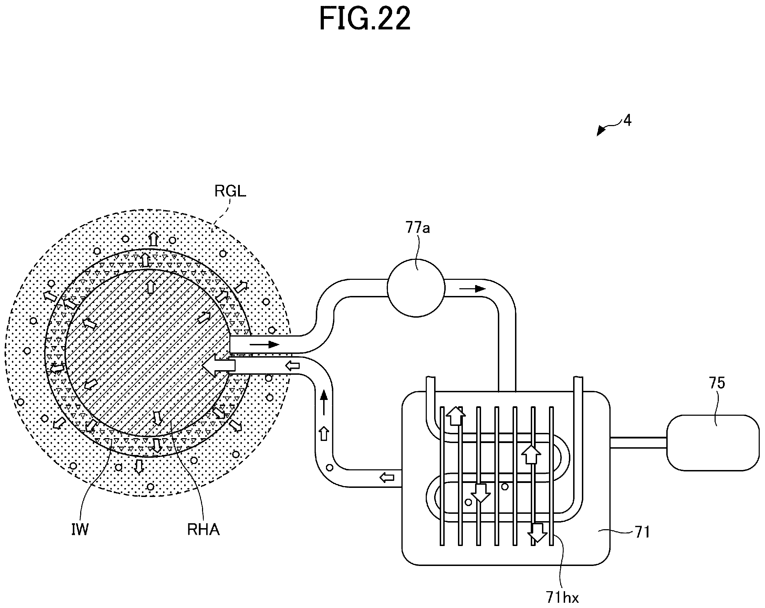

Next, the water collecting device 4 supplies a high-temperature gas to the regolith RGL and the ice wall IW to expand the ice wall IW (Fig. 22) .

The gas supply part 75 supplies a gas to the heating part 71. The gas supplied from the gas supply part 75 is, for example, a nitrogen gas. A kind of the gas supplied from the gas supply part 75 is not particularly limited, except that the gas is a non-condensable and inert gas. The compressor 76 is operated in the first mode. Specifically, the heat exchanger 71hx functions as the condenser. Moreover, the heating part 71 recovers a gas from the regolith RGL via the blower 77a. The gas supplied from the heating part 71 is circulated in a manner such that the gas is recovered, heated again, and then supplied.

The high-temperature gas is supplied to the interior of the ice wall IW from the heating part 71. The inner surface of the ice wall IW is heated by supplying the high-temperature gas to the interior of the ice wall IW. Since condensation and solidification of water do not occur at the inner surface of the ice wall IW, the ice wall IW can be grown only toward the outer surface side of the ice wall IW. Note that, heat transfer between the gas and the ice wall IW is achieved by convection heat transfer, thus it takes some time to heat the ice wall IW.

In Fig. 22, a high-temperature gas, such as a nitrogen gas, is used as a heating medium. Heat transfer between the heating medium and the regolith RGL or the ice wall IW is achieved by convection heat transfer. The high-temperature gas serving as the heating medium is supplied from the heating part 71 to the regolith RGL and the ice wall IW by the blower 77a.

As the high-temperature gas is supplied from the heating part 71 to the regolith RGL, the spherical shell of the ice wall IW can be grown large. Moreover, a thickness of the ice wall IW can be increased by supplying the high-temperature gas from the heating part 71 to the regolith RGL. Even if there is a hole in the spherical shell of the ice wall IW, moreover, water vapor is selectively supplied to the hole to fill the hole by supplying the high-temperature gas from the heating part 71 to the regolith RGL.

(Collecting of water from ice wall IW)

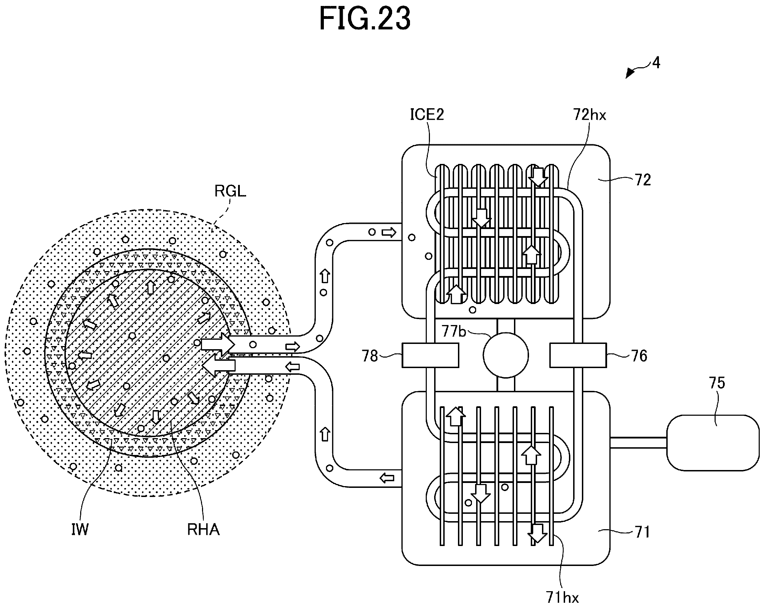

Next, the water collecting device 4 supplies a gas dried at a high temperature to the interior of the ice wall IW to collect water from the ice wall IW (Fig. 23).

The gas supply part 75 supplies a gas to the heating part 71. The gas supplied from the gas supply part 75 is, for example, a nitrogen gas. A kind of the gas supplied from the gas supply part 75 is not limited, except that the gas is a non-condensable and inert gas. The compressor 76 is operated in the first mode. Specifically, the heat exchanger 71hx functions as a condenser, and the heat exchanger 72hx functions as an evaporator. Moreover, the blower 77b supplies a high-temperature dry gas from the heating part 71 to the regolith RGL, and recovers the gas including water vapor from the regolith RGL to the cooling part 72. The gas supplied from the heating part 71 is circulated such that the gas is recovered by the cooling part 72 to be cooled and dehumidified, and is again heated by the heating part 71 to be supplied to the regolith RGL.

As a high-temperature dry gas, such as a nitrogen gas, is supplied from the heating part 71 to the interior of the ice wall IW, the inner surface of the ice wall IW is heated. As the inner surface of the ice wall IW is heated, the ice at the inner surface side of the ice wall IW is sublimated. The gas obtained by sublimating the ice at the inner surface side of the ice wall IW includes moisture (water vapor). The gas including the water vapor is cooled by the cooling part 72. The gas including the water vapor, which is recovered in the cooling part 72, is cooled so that the water vapor in the gas is condensed and solidified. Ice ICE2 is deposited on the heat exchanger 72hx. Specifically, the cooling part 72 recovers the water vapor within the region surrounded by the ice wall IW and collects water from the recovered water vapor.

In Fig. 23, a high-temperature gas, such as a nitrogen gas, is used as a heating medium. Heat transfer between the heating medium and the ice wall IW is achieved by convection heat transfer caused by the circulation of the high-temperature dry gas. The high-temperature gas serving as the heating medium is supplied from the heating part 71 to the ice wall IW by the blower 77b.

As the high-temperature gas is supplied from the heating part 71 to the regolith RGL, the moisture derived from the ice at the inner surface side of the ice wall IW is recovered. The recovered moisture is frozen by the cooling part 72.

(Dissolving the frozen moisture to water)

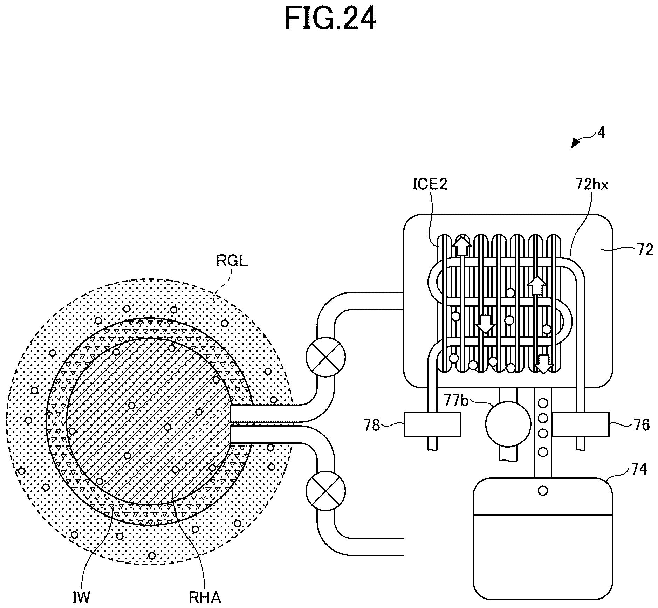

Next, the water collecting device 4 dissolves the ice, which is frozen and deposited on the heat exchanger 72hx of the cooling part 72, to transform the ice into water (Fig. 24).

When the amount of the ice accumulated on the heat exchanger 72hx of the cooling part 72 is increased to a point where efficiency of icing is reduced, the rotations of the compressor 76 are reversed. Specifically, the compressor 76 is operated in the second mode. As the compressor 76 is operated in the second mode, the heat exchanger 72hx functions as the condenser. As the heat exchanger 72hx functions as the condenser, the ice (ice ICE2) deposited on the heat exchanger 72hx is heated and dissolved. Water obtained by dissolving the ice is stored in the water storage 74. Note that, valves respectively disposed in the pipes of the heating part 71 and the cooling part 72 extended into the regolith RGL are closed so that the water vapor does not return back to the regolith.

The water collecting device 4 can continuously collect water by switching the rotational direction of the compressor 76, specifically alternating the operation modes of the compressor 76.

Note that, the heating part 71 and the water supply part 73 are one example of the ice-wall forming part, and the cooling part 72 is one example of the water collecting part. Moreover, when a gas dried at a high temperature is supplied from the heating part 71 via the gas supply pipe 71p to form an ice wall IW, the heating part 71 is one example of the ice-wall forming part.

<Fifth embodiment>

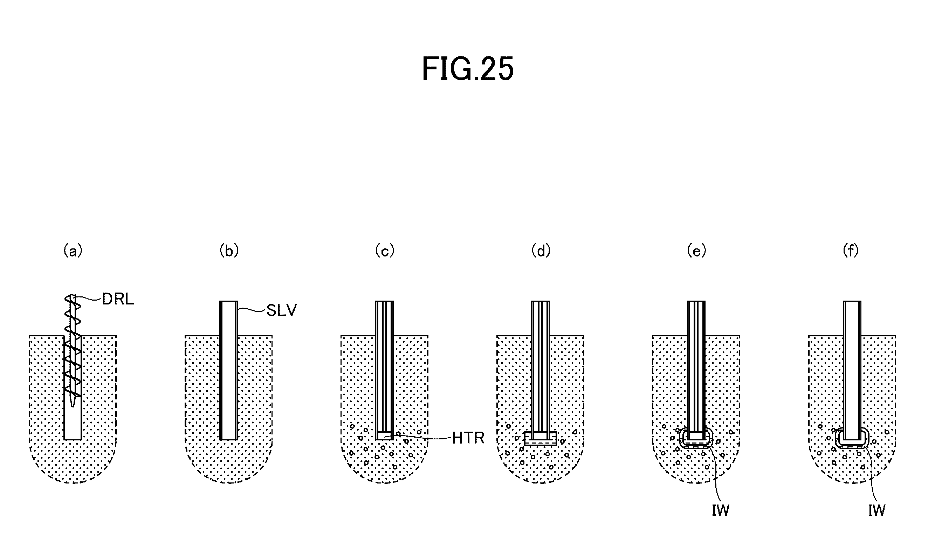

As the water collecting device according to the fifth embodiment, an ice wall IW formation method where an ice wall IW is first formed within the regolith RGL will be explained. Fig. 25 is a diagram explaining a formation method of an ice wall IW.

First, a hole is bored into the regolith RGL by a drill DRL (Fig. 25(a)). Then, a sleeve SLV is inserted into the bored hole so that the hole does not collapse (Fig. 25(b)). Then, a heater HTR is inserted into the deepest portion of the sleeve SLV (Fig. 25(c)). As the heater HTR is inserted into the deepest portion of the sleeve SLV, the heater HTR comes into contact with the regolith RGL. Note that, in Fig. 25(c), each circle indicates an ice grain pre-existing within the regolith RGL.

Next, electricity is supplied to the heater HTR to heat the heater HTR (Fig. 25(d)). As the heater HTR is heated, ice within the regolith RGL in contact with the heater HTR is melted and sublimated. Then, the water vapor generated by sublimation in the vicinity of the heater HTR is recondensed at a position slightly away therefrom, for example, a position approximately 10 mm away (Fig. 25(e)). As the water vapor is recondensed, an ice wall IW is formed to surround the heater HTR. Then, supply of electricity to the heater HTR is stopped, and the heater HTR is pulled out from the sleeve SLV so that the ice wall IW whose interior is free from the moisture is formed.

Note that, as the formation method of the ice wall IW, the method using water vapor and the method using a dried and heated gas, both as explained in association with the water collecting device according to the first embodiment, and the method using a heater HTR as explained in association with the water collecting device according to the fifth embodiment may be used in combination.

For example, formation of an ice wall may be attempted by heating the regolith RGL using a heater HTR. Whether or not an ice wall IW is formed by heating the regolith RGL by the heater HTR depends on a water content of the regolith RGL. Therefore, formation of an ice wall may be attempted first by heating the regolith RGL using the heater HTR, followed by filling the region heated by the heater HTR with a gas to measure an internal pressure. Then, whether or not an ice wall is formed may be determined.

For example, if no change in the internal pressure is observed after filling the region heated by the heater HTR with a gas, it may be determined that an ice wall is formed. If the internal pressure is gradually decreased after filling the region heated by the heater HTR with a gas, it may be determined that an ice wall may not be sufficiently formed and there may be a hole in the ice wall.

In a case where an ice wall is not formed by the heater HTR, for example, filling of the hole in the ice wall may be attempted by supplying a dried and heated gas. Then, the region in which the ice wall is formed is again filled with a gas to measure an internal pressure, and whether or not the ice wall is completed may be determined.

For example, if there is no change in the internal pressure after filling the region in which the ice wall is formed with a gas, it may be determined that the ice wall is completed. If the internal pressure is gradually decreased after filling the region in which the ice wall is formed with a gas, it may be determined that the ice wall is not sufficiently formed, and there may be a hole in the ice wall.

If the ice wall is not completed by supplying the dried and heated gas, water vapor may be further supplied to form an ice wall.

By forming an ice wall in the above-described manner, an ice wall can be formed without using water, when there is a sufficient amount of moisture within the regolith RGL. As the ice wall is formed without water, an amount of water used for collecting water can be reduced.

Note that, the heater HTR is one example of the ice-wall forming part.

<Sixth embodiment>

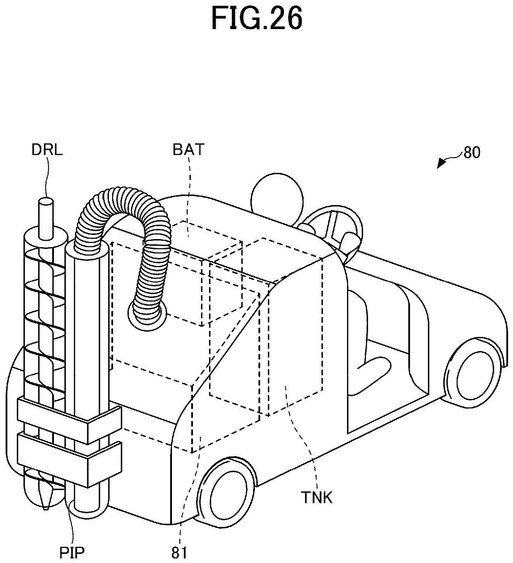

As the water collecting device according to the sixth embodiment, an example where a water collecting device is mounted in a lunar surface rover will be explained. Fig. 26 is a diagram explaining the outline of the water collecting device according to the sixth embodiment.

The above-described water collecting device according to the present embodiment may be configured as a rover-type water collecting device, in which the water collecting device is mounted on a rover in a size of about a one-passenger vehicle.

The rover 80, which is the rover-type water collecting device, includes a water collecting device 81, a power supply battery BAT, and a water tank TNK. At the rear of the rover 80, a pipe PIP that supplies and recovers water vapor or a gas, and a drill DRL that bores a hole to install the pipe PIP in the regolith are disposed. The pipe PIP is coupled to the water collecting device 81.

Use of the rover 80 enables, for example, collection of water while traveling across the lunar surface.

Moreover, a rover-type water collecting device (rover 180), which is a modification example of the rover-type water collecting device (rover 80) as the water collecting device according to the sixth embodiment, will be explained.

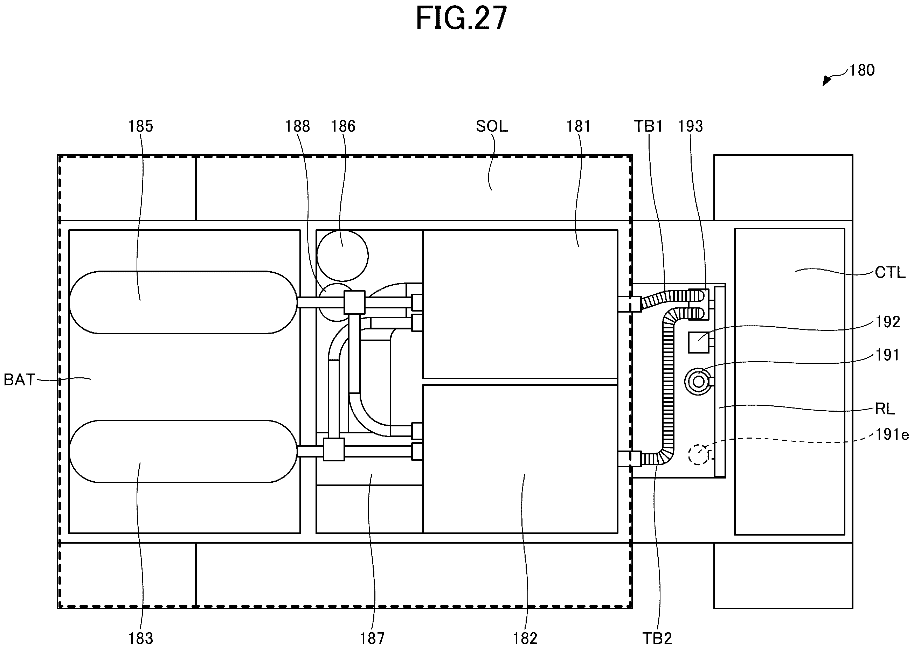

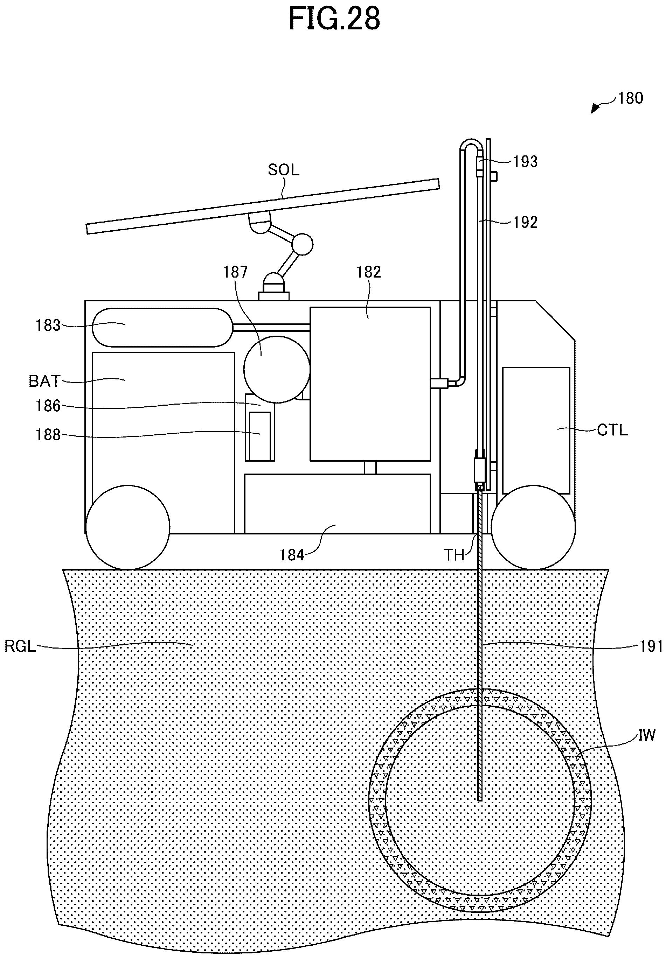

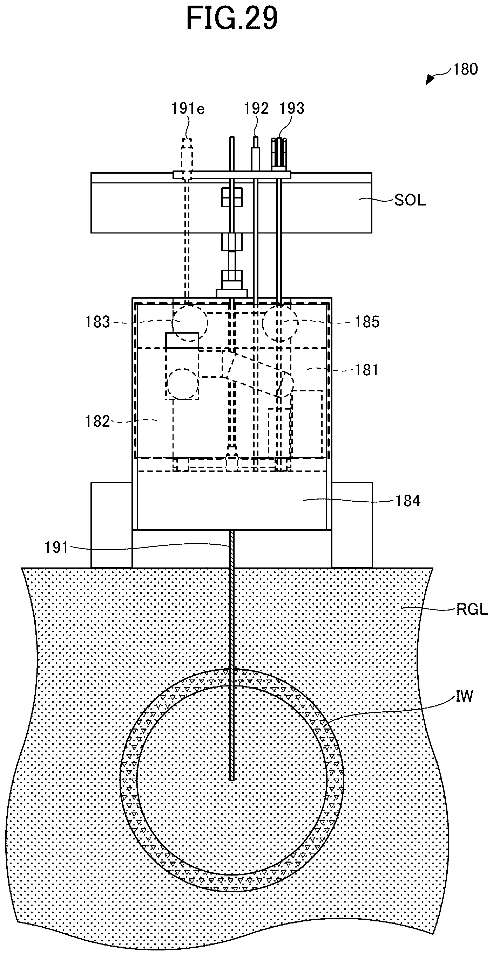

Each of Figs. 27, 28, and 29 is a diagram explaining the outline of the rover 180, which is the modification example of the water collecting device according to the sixth embodiment. Fig. 27 is a top view of the rover 180. Fig. 28 is a side view of the rover 180. Fig. 29 is a front view of the rover 180. Note that, an ice wall IW formed within regolith RGL when water is collected is illustrated in Figs. 28 and 29.

The rover 180 includes a first temperature adjuster 181, a second temperature adjuster 182, a water supply part 183, a water storage 184, a gas supply part 185, a compressor 186, a blower 187, and an expansion valve 188.

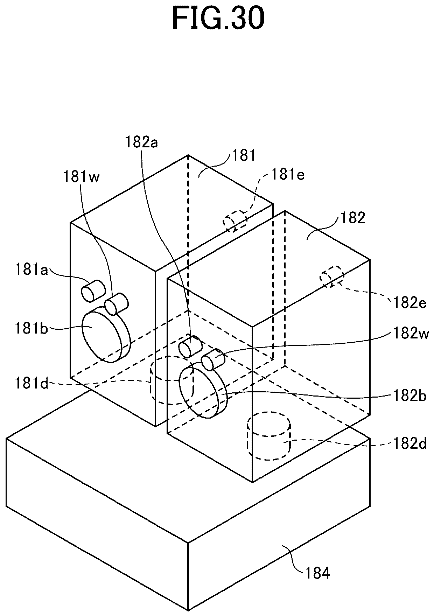

Each of the first temperature adjuster 181 and the second temperature adjuster 182 heats or cools a gas. Fig. 30 is a diagram explaining the first temperature adjuster 181 and the second temperature adjuster 182.

The first temperature adjuster 181 includes a gas supply port 181a, a water supply port 181w, a water discharge port 181d, a blower connection port 181b, and an external connection port 181e.

The gas supply port 181a is coupled to the gas supply part 185. A non-condensable gas is supplied from the gas supply port 181a. The water supply port 181w is coupled to the water supply part 183. Moisture for forming an ice wall IW is supplied from the water supply part 183 to the water supply port 181w. The water discharge port 181d is coupled to the water storage 184. The water collected by the heat exchanger 181hx disposed inside the below-described first temperature adjuster 181 is discharged from the water discharge port 181d to the water storage 184.

The blower connection port 181b is coupled to the blower 187. The external connection port 181e is coupled to a thermal mining bit 193 via a flexible tube TB1.

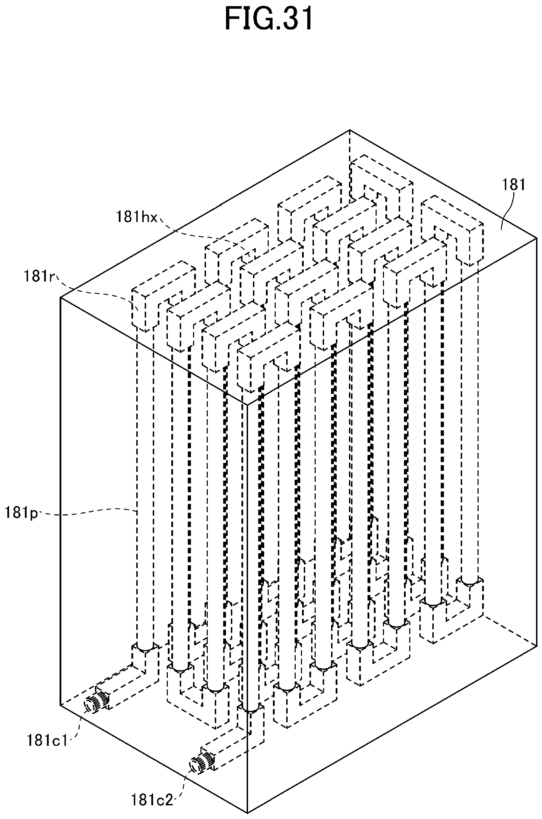

The first temperature adjuster 181 includes a heat exchanger 181hx disposed therein. Fig. 31 is a diagram explaining the heat exchanger 181hx disposed in the first temperature adjuster 181. The heat exchanger 181hx is formed by connecting pipes 181p with a bending portion 181r. A refrigerant is passed through the pipes 181p. The refrigerant flows in from one of a refrigerant port 181c1 and a refrigerant port 181c2, and flows out from the other one of the refrigerant port 181c1 and the refrigerant port 181c2. One of the refrigerant port 181c1 and the refrigerant port 181c2 is coupled to the compressor 186. The other one of the refrigerant port 181c1 and the refrigerant port 181c2 is coupled to the expansion valve 188.

A gas flows through a space between the pipes 181p. As the gas flows between the pipes 181p, the heat exchanger 181hx carries out heat transfer between the gas and the refrigerant.

In the description above, the first temperature adjuster 181 is explained, but the second temperature adjuster 182 is the same. The heat exchanger 181hx disposed in the first temperature adjuster 181 and a heat exchanger disposed in the second temperature adjuster 182 are coupled to each other via the compressor 186 and the expansion valve 188 to thereby constitute a refrigerant circuit.

As a high-pressure refrigerant is supplied from the compressor 186 to the heat exchanger 181hx, the heat exchanger 181hx functions as a condenser. Specifically, the first temperature adjuster 181 functions as a heating part that heats a gas. On the other hand, the heat exchanger disposed in the second temperature adjuster 182 constituting the refrigerant circuit functions as an evaporator. Specifically, the second temperature adjuster 182 functions as a cooling part that cools a gas.

As a low-pressure refrigerant is supplied from the compressor 186 to the heat exchanger 181hx via the expansion valve 188, the heat exchanger 181hx functions as an evaporator. Specifically, the first temperature adjuster 181 functions as a cooling part that cools a gas. On the other hand, the heat exchanger disposed in the second temperature adjuster 182 constituting the refrigerant circuit functions as a condenser. Specifically, the second temperature adjuster 182 functions as a heating part that heats a gas.

The second temperature adjuster 182 includes a gas supply port 182a, a water supply port 182w, a water discharge port 182d, a blower connection port 182b, and an external connection port 182e.

The gas supply port 182a is coupled to the gas supply part 185. A non-condensable gas is supplied from the gas supply port 182a. The water supply port 182w is coupled to the water supply part 183. Moisture for forming an ice wall IW is supplied from the water supply part 183 to the water supply port 182w. The water discharge port 182d is coupled to the water storage 184. Water collected by a heat exchanger disposed in the second temperature adjuster 182 is discharged from the water discharge port 182d to the water storage 184.

The blower connection port 182b is coupled to the blower 187. The external connection port 182e is coupled to a thermal mining bit 193 via a flexible tube TB2.

The blower 187 is coupled to each of the blower connection port 181b of the first temperature adjuster 181 and the blower connection port 182b of the second temperature adjuster 182.

As the blower 187 rotates fans in a first rotational direction, for example, the blower 187 sends a gas to the first temperature adjuster 181. Specifically, the blower 187 sends a gas to the blower connection port 181b. The gas sent from the blower 187 to the blower connection port 181b performs heat exchange at the heat exchanger 181hx of the first temperature adjuster 181, and is then discharged from the external connection port 181e.

As the blower 187 rotates fans in the first rotational direction, for example, the blower 187 suctions the gas from the second temperature adjuster 182. Specifically, the blower 187 suctions the gas from the blower connection port 182b. As the blower 187 suctions the gas from the blower connection port 182b, the gas is suctioned from the external connection port 182e to perform heat exchange at the heat exchanger of the second temperature adjuster 182, and is then discharged from the blower connection port 182b to the blower 187.

As the blower 187 rotates the fans in a second rotational direction that is a reverse direction of the first rotational direction, the blower 187 suctions the gas from the first temperature adjuster 181. Specifically, the blower 187 suctions the gas from the blower connection port 181b. As the blower 187 suctions the gas from the blower connection port 181b, the gas is suctioned from the external connection port 181e to perform heat exchange at the heat exchanger 181hx of the first temperature adjuster 181, and is then discharged from the blower connection port 181b to the blower 187.

As the blower 187 rotates the fans in the second rotational direction that is a reverse direction of the first rotational direction, for example, the blower 187 sends the gas to the second temperature adjuster 182. Specifically, the blower 187 sends the gas to the blower connection port 182b. The gas sent from the blower 187 to the blower connection port 182b performs heat exchange at the heat exchanger of the second temperature adjuster 182, and is then discharged from the external connection port 182e.

Moreover, the rover 180 includes a drill bit 191, a heater bit 192, and a thermal mining bit 193. The drill bit 191, heater bit 192, and thermal mining bit 193 are each movably attached to the rail RL.

Each of the drill bit 191, heater bit 192, and thermal mining bit 193 is moved above an opening TH formed in a floor of the rover 180. Then, any of the drill bit 191, heater bit 192, or thermal mining bit 193, which is moved above the opening TH, is inserted into the regolith RGL.

As the drill bit 191 is inserted into the regolith RGL, for example, a hole is bored into the regolith RGL as illustrated in Fig. 4 and Fig. 25(a).

A heater HTR is disposed at the edge of the heater bit 192, for example, as illustrated in Fig. 25(c). As the heater bit 192 is inserted into the hole bored by the drill bit 191, for example, an ice wall is formed as illustrated in Fig. 25(c) to Fig. 25 (f) .

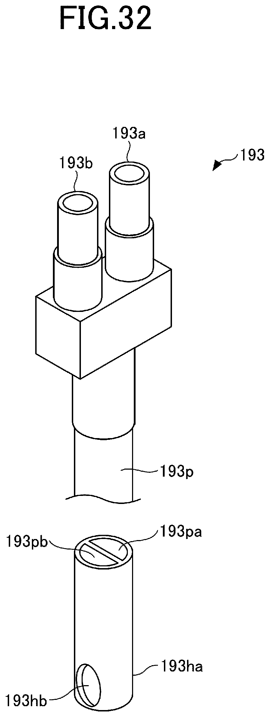

The thermal mining bit 193 recovers a gas from the regolith RGL as well as supplying a gas into the regolith RGL. Fig. 32 is a diagram schematically explaining the thermal mining bit 193. In Fig. 32, the pipe 193p is illustrated in a state where the pipe 193p is cut in the middle in order to explain the interior of the pipe 193p.

The thermal mining bit 193 includes a pipe 193p to be inserted into the regolith RGL. The thermal mining bit 193, includes, at an upper portion of the pipe 193p, a first connection portion 193a that is coupled to the first temperature adjuster 181 via a tube TB1, and a second connection portion 193b that is coupled to the second temperature adjuster 182 via a tube TB2.

The pipe 193p includes a first channel 193pa and a second channel 193pb. The first channel 193pa and the second channel 193pb are each formed along the longitudinal direction of the pipe 193p. The first channel 193pa is continued to the first connection portion 193a at the upper portion of the pipe 193p. Moreover, the second channel 193pb is continued to the second connection portion 193b at the upper portion of the pipe 193p.

The pipe 193p has an opening 193ha and an opening 193hb at an end thereof. The opening 193ha is continued to the first channel 193pa. Moreover, the opening 193hb is continued to the second channel 193pb.

For example, the gas supplied from the first temperature adjuster 181 travels through the first connection portion 193a into the first channel 193pa, and is then supplied into the regolith RGL from the opening 193ha. The gas from the regolith RGL travels from the opening 193hb into the second channel 193pb, and is suctioned from the second connection portion 193b to the second temperature adjuster 182.

For example, the gas supplied from the second temperature adjuster 182 moreover travels from the second connection portion 193b into the second channel 193pb, and is then supplied from the opening 193hb into the regolith RGL. The gas from the regolith RGL travels from the opening 193ha into the first channel 193pa, and is then suctioned from the first connection portion 193a to the first temperature adjuster 181.

The water supply part 183 supplies moisture for forming an ice wall IW to the first temperature adjuster 181 and the second temperature adjuster 182. In a case where a sufficient amount of moisture is included within the regolith RGL, a gas heated at a high temperature may be supplied from the first temperature adjuster 181 and the second temperature adjuster 182, which serve as a heating part, to form an ice wall IW.

The gas supply part 185 supplies a non-condensable gas to the first temperature adjuster 181 and to the second temperature adjuster 182. The non-condensable gas is, for example, a nitrogen gas, an oxygen gas, a hydrogen gas, or the like.

Moreover, the rover 180 includes a control unit CTL, a solar panel SOL, and a power supply battery BAT.

The control unit CTL controls the entire rover 180. Moreover, the control unit CTL controls each of the drill bit 191, the heater bit 192, and the thermal mining bit 193. Moreover, the control unit CTL controls the compressor 186, the blower 187, and the like to operate the rover 180 to collect the moisture included within the regolith RGL.

The solar panel SOL generates power for operating the rover 180. The solar panel SOL generates electricity from sunlight. The electricity generated by the solar panel SOL is supplied to the power supply battery BAT, in addition to the control unit CTL, the compressor 186, the blower 187, and the like.

The power supply battery BAT stores the electricity, and supplies the stored electricity to the control unit CTL, the compressor 186, the blower 187, and the like. For example, the power supply battery BAT is charged at a base or the like. Moreover, the power supply battery BAT is charged with the electricity that is generated by the solar panel SOL and is supplied to the power supply battery BAT.

The rover 180 operates one of the first temperature adjuster 181 and the second temperature adjuster 182 as a heating part, and the other one of the first temperature adjuster 181 and the second temperature adjuster 182 as a cooling part, and then switches so that one of the first temperature adjuster 181 and the second temperature adjuster 182 is operated as a cooling part, and the other one of the first temperature adjuster 181 and the second temperature adjuster 182 is operated as a heating part. By operating each of the first temperature adjuster 181 and the second temperature adjuster 182 to alternate between the heating part and the cooling part, moisture within the regolith RGL can be continuously collected.

Note that, the water supply part 183, and the first temperature adjuster 181 or the second temperature adjuster 182, which functions as the heating part, is one example of the ice-wall forming part, and the first temperature adjuster 181 or the second temperature adjuster 182, which functions as the cooling part, is one example of the water collecting part. Moreover, the heater bit 192 is one example of the ice-wall forming part.

<Seventh embodiment>

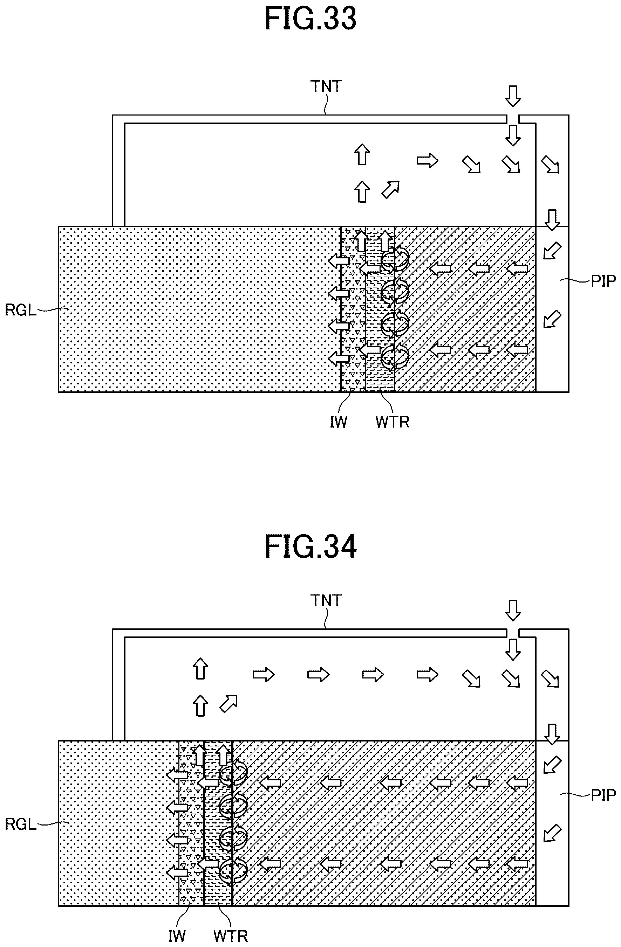

The water collecting device according to the seventh embodiment has a configuration where the ground surface is covered with a tent TNT so that there is no ice wall IW on the ground surface side. Each of Fig. 33 and Fig. 34 is a diagram explaining the outline of the water collecting device according to the seventh embodiment.

A heated gas is supplied from the pipe PIP to the ice wall. The ice pre-existing within the regolith RGL is transformed into water vapor together with the ice wall IW sublimated by the heated air supplied from the pipe PIP. The water vapor is discharged from the surface of the regolith RGL. The water vapor discharged from the surface of the regolith RGL into the tent TNT is recovered separately.

As the heated gas is supplied from the pipe PIP, the ice wall IW moves toward the outer surface side (Fig. 34). As the ice wall IW moves, the water WTR pre-existing in the region to which the ice wall IW is moved can be recovered.

<Regarding amount of water that can be collected by water collecting device according to the present embodiment>

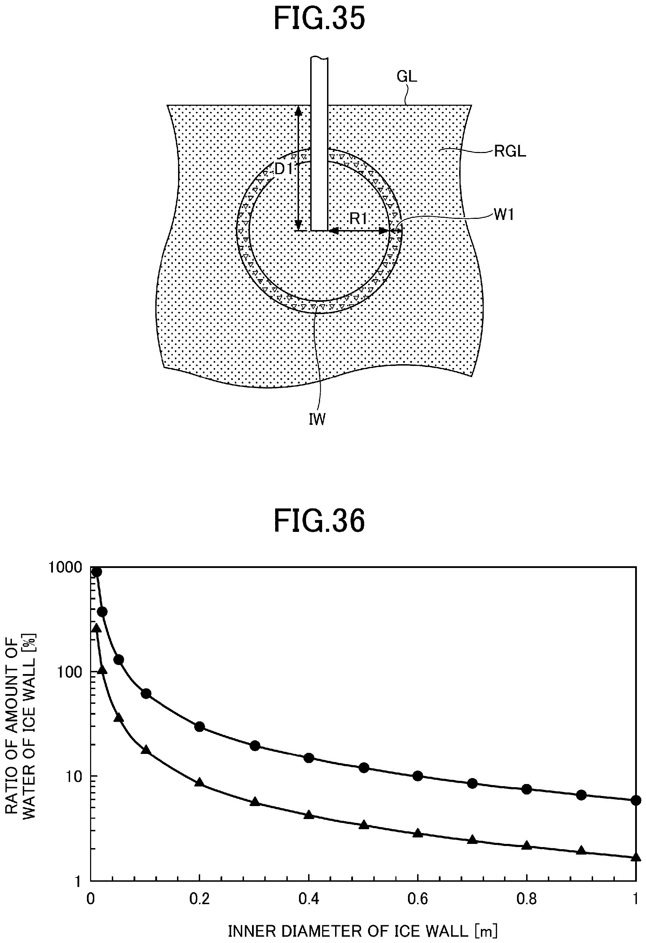

An amount of water that can be collected by the water collecting device according to the present embodiment will be discussed. Fig. 35 is a diagram explaining a model for calculating an amount of water that can be collected by the water collecting device according to the present embodiment at the lunar surface. It is assumed that a spherical shell of an ice wall IW having an inner radius R1 and a thickness W1 is present at the depth D1.

As an example, a porosity n (unit: dimensionless) of the regolith RGI is calculated as follows, assuming that a bulk density $\rho$ of the dried regolith RGL is 1800 kg/m$^3$, specific gravity G of the fine particles constituting the regolith RGL is 3, and a density of water $\rho$w is 1000 kg/m$^3$.

$$\rho = G \times \rho w \times (1-n)$$
$$1800 = 3 \times 1000 \times (1-n)$$
$$N = 0.4$$

Specifically, the porosity n of the regolith RGL is 0.4.

(Volume ratio of ice included in regolith RGL)

In a case where an amount of the ice in the regolith RGL is 4% by weight, and in a case where the amount thereof is 30% by weight, a volume ratio of the moisture in the regolith RGL within a sphere of the regolith RGL having a radius R1, specifically, in the interior of the ice wall IW having an inner radius R1, is calculated.

Here, the calculation is performed, assuming that voids between fine particles constituting the regolith are as they are in the dried regolith, and part of the fine particles of the regolith is replaced with ice. Specifically, a volume ratio of the voids in the regolith RGL is determined as 40%.

As the calculation is performed, assuming that the density of ice is 930 kg/m$^3$ (density of ice at a temperature of -100°C), a volume ratio of the ice in the regolith RGL is approximately 7%, and the volume ratio of the fine particles in the regolith RGL is approximately 53%, when the amount of the ice in the regolith RGL is 4% by weight. When the amount of the ice in the regolith RGL is 30% by weight, moreover, the volume ratio of the ice in the regolith RGL is approximately 35%, and the volume ratio of the fine particles in the regolith is approximately 25%.

(Amount of water included in regolith RGL corresponding to interior of ice wall IW)

An amount of water included in the regolith RFL corresponding to the interior of the ice wall IW is roughly calculated, assuming that the ice wall IW is a spherical shell having a radius R1. Here, the calculation is performed with the radius R1 being 0.5 m. Thus, a volume of the interior of the ice wall IW is 0.52 m$^3$. As the amount of water in the interior of the ice wall IW is calculated using the density of ice determined from the volume ratio of the ice in the regolith RGL, the amount of water in the interior of the ice wall IW is approximately 35 kg when the amount of the ice in the regolith RGL is 4% by weight, and is approximately 170 kg when the amount of the ice in the regolith RGL is 30% by weight.

Specifically, the water collecting device according to the present embodiment can collect approximately 35 kg of water when an amount of ice in the regolith RGL is 4% by weight, and approximately 170 kg of water when the amount of ice in the regolith RGL is 30% by weight.

Moreover, in association with an amount of water used to form the ice wall IW, a ratio of the amount of water used to an amount of water that can be collected is discussed. Here, a calculation is performed with a desired thickness W1 of the ice wall IW being 5 mm. As the amount of the water used to form the ice wall IW that constitutes a spherical shell having a thickness W1 of 5 mm, a ratio of the amount of the water used to the amount of water that can be collected is presented in Fig. 36.

When the amount of the ice in the regolith RGL is 4% by weight, an amount of water that can be collected from the interior of the ice wall IW exceeds an amount of water used for forming the ice wall IW, if the radius R1 of the ice wall IW is 100 mm (0.1 m) or greater. When the amount of the ice in the regolith RGL is 30% by weight, moreover, an amount of water that can be collected from the interior of the ice wall IW exceeds an amount of water used for forming the ice wall IW, if the radius R1 of the ice wall IW is 50 mm (0.05 m) or greater.

For example, in a case where the radius R1 of the ice wall IW is 1 m, the amount of water that can be recovered from the interior of the ice wall IW is approximately 35 kg when the amount of the ice in the regolith RGL is 4% by weight. The amount of water used to form the ice wall IW is approximately 3 kg. Therefore, the water in the net amount of approximately 32 kg can be collected from the regolith RGL. When the amount of the ice in the regolith RGL is 30% by weight, similarly, the amount of the water that can be recovered from the interior of the ice wall IW is approximately 170 kg, and the amount of the water used to form the ice wall IW is approximately 3 kg. Therefore, the water in the net amount of approximately 167 kg can be collected from the regolith RGL.

(Amount of heat used to heat the regolith RGL corresponding to the interior of the ice wall IW)

An amount of heat used to heat the regolith RGL corresponding to the interior of the ice wall IW is roughly calculated, assuming that the ice wall IW is a spherical shell having a radius R1. Here, the calculation is performed with the radius R1 being 0.5 m. The volume of the interior of the ice wall IW is 0.52 m$^3$.

Here, the specific heat of the fine particles of the regolith RGL is determined as 486 J/kg/K (at a temperature of -100°C), and the specific heat of the ice is determined as 1377 J/kg/K (at a temperature of -100°C). Moreover, heat of condensation of the ice is determined as 2442 kJ/kg, and heat of solidification of the water is determined as 334 kJ/kg.

The ice in a vacuum starts sublimating at a temperature of -100°C to -50°C. In a case where ice is present within the regolith RGL, it is therefore assumed that the ice is present in a condition where at least a temperature is -100°C or lower. In order to take out the ice present within the regolith RGL at an extremely low temperature through sublimation, the temperature is heated at least to a temperature in the range of from -100°C to -50°C or higher.

In a rough calculation of an amount of heat used for heating, as an assumption for the calculation, it is assumed that ice-containing regolith RGL, in which an amount of the ice in the regolith RGL is 4% by mass, exists below the ground GL of the lunar surface at a temperature of -150°C. Then, the energy used to heat the interior of the ice wall IW, which is a spherical shell having a radius R1 of 0.5 m, up to a temperature of -50°C to sublimate the ice to water vapor to be recovered is calculated.

When the amount of ice in the regolith RGL is 4% by weight, the following can be calculated.

Weight of the regolith RGL in the interior of the ice wall IW: 865 kg
Amount of water in the interior of the ice wall IW: 35 kg
Specific heat of the ice-containing regolith corresponding to the interior of the ice wall IW: 522 J/kg/K

Thus, the sensible heat energy for heating the regolith RGL from the temperature of -150°C to the temperature of -50°C is 45 MJ, the latent heat energy for transforming the ice into water vapor is 96 MJ, and therefore the amount of heat, which is 141 MJ in total, is used. For example, when water is recovered within approximately 1 hour, a heating capacity of approximately 39 kW is needed.

As the same calculation is performed on a case where an amount of ice in the regolith RGL is 30% by weight, the following can be calculated.

Weight of the regolith RGL corresponding to the interior of the ice wall IW: 565 kg

Amount of water in the interior of the ice wall IW: 170 kg

Specific heat of the ice-containing regolith corresponding to the interior of the ice wall IW: 753 J/kg/K

Thus, the sensible heat energy for heating the regolith RGL from the temperature of -150°C to the temperature of -50°C is 42 MJ, the latent heat energy for transforming the ice into water vapor is 470 MJ, and therefore the amount of heat, which is 512 MJ in total, is used. For example, when water is recovered within approximately 1 hour, a heating capacity of approximately 143 kW is needed.

<Regarding behavior of ice wall relative to water collecting device according to present embodiment>

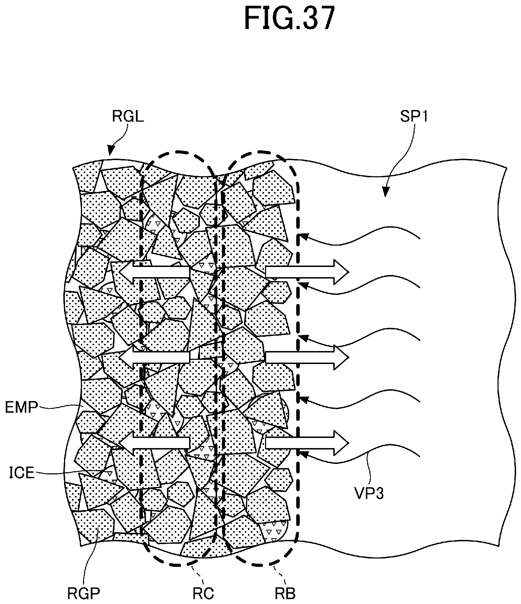

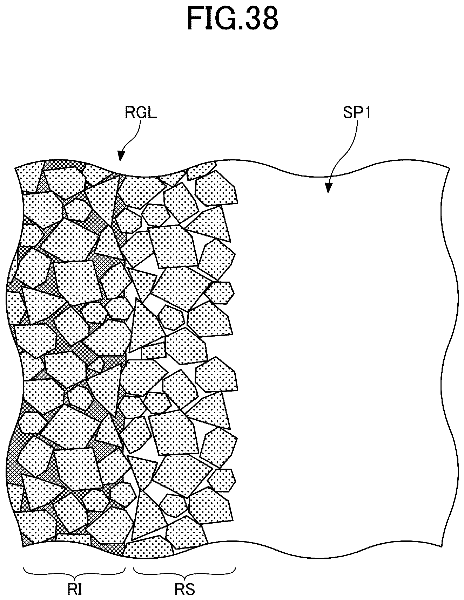

How an ice wall behaves relative to the water collecting device according to the present embodiment will be explained. Each of Fig. 37 and Fig. 38 is a diagram explaining behavior of an ice wall relative to the water collecting device according to the present embodiment.

The regolith RGL is heated by the dry gas VP3 from the inside of the space SP1. The ice in the inner surface region RB of the regolith RGL is sublimated into water vapor, which is then incorporated into the dry gas VP3. The dry gas VP3 into which the water vapor is incorporated is recovered by the water collecting device.

Ice in the region RC of the regolith RGL, which is set back from the inner surface of the regolith RGL, is also heated and sublimated. The water vapor derived from the sublimated ice in the region RC moves toward the outer side of the regolith RGL because the outer side of the regolith RGL has a low temperature and a low pressure compared to the inner surface side of the regolith RGL.

The water vapor moving towards the outer side moves through voids within the regolith RGL toward the outer side. As the temperature of the regolith RGL is low, the temperature of the water vapor drops on a solid surface of each fine particle of the regolith RGL so that the water vapor is recondensed and solidified. When the water vapor is recondensed and solidified, the voids are filled with ice.

As described above, an ice-rich region RI is formed within the regolith RGL. Moreover, a dry region RS is formed at the inner surface side relative to the ice-rich region RI. As the ice-rich region RI, i.e., an ice wall, is formed, a high-pressure gas present in the interior of the ice wall does not leak to the vacuum region outside the ice wall. Moreover, the ice constituting the ice wall moves toward the outer side to expand the ice wall.

<<Water electrolysis device>>

Next, a water electrolysis device that performs electrolysis of water to generate hydrogen and oxygen in a low gravity environment, such as on the lunar surface, will be explained. For example, the water electrolysis device according to the present embodiment performs electrolysis on water collected by the water collecting device according to the present embodiment.

Examples of a system of the water electrolysis device mainly include an alkaline water electrolysis system, a proton exchange membrane water electrolysis system, a solid oxide water electrolysis system, and the like. For water electrolysis performed at the lunar surface and in outer space, the proton exchange membrane water electrolysis is considered to be the most suitable because the proton exchange membrane water electrolysis can use water of normal temperature, which can be easily handled, and can cope with frequent stops and starts. In the proton exchange membrane water electrolysis system, an oxygen gas is released into water on an anode side. Therefore, a mechanism for extracting the oxygen gas from water is additionally required in the proton exchange membrane water electrolysis system.

On the earth, oxygen is separated from water in a water storage tank or the like by the buoyancy of bubbles of the oxygen gas generated due to the difference in specific gravity between the water and the oxygen gas. However, in outer space and on the lunar surface where the gravity is as small as one sixth of the earth, it is difficult to separate water and oxygen from each other by the buoyancy of the oxygen gas.

The water electrolysis device according to the present embodiment can perform desirable gas-liquid separation even in the environment of low gravity, such as outer space, the lunar surface, and the like.

<First embodiment>

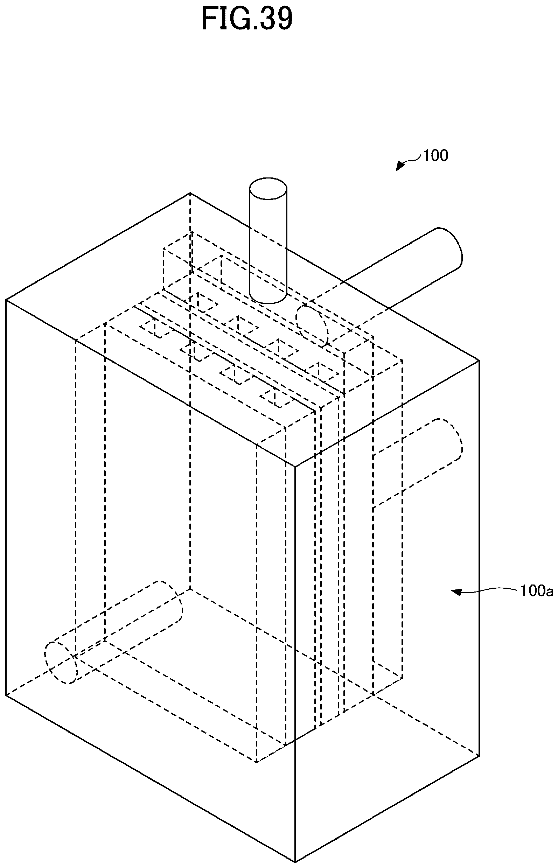

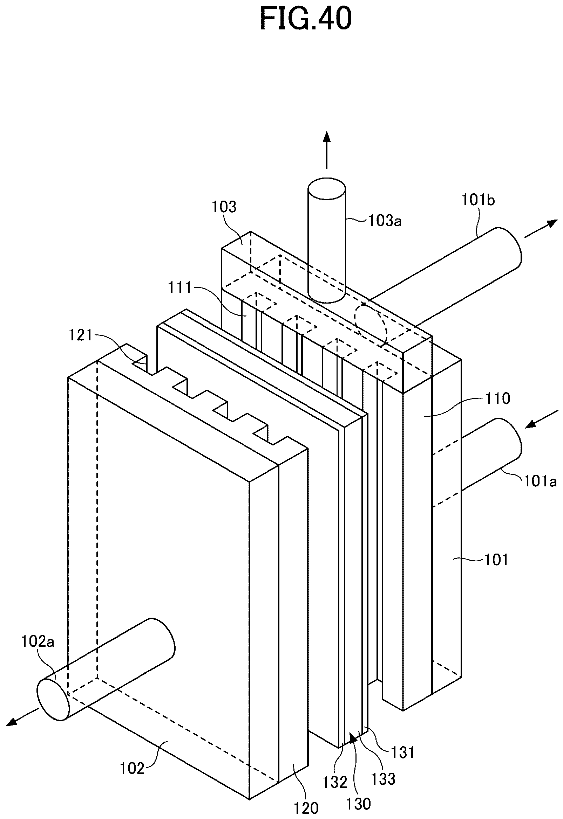

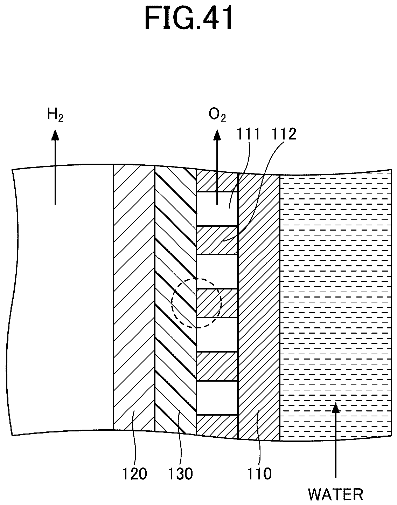

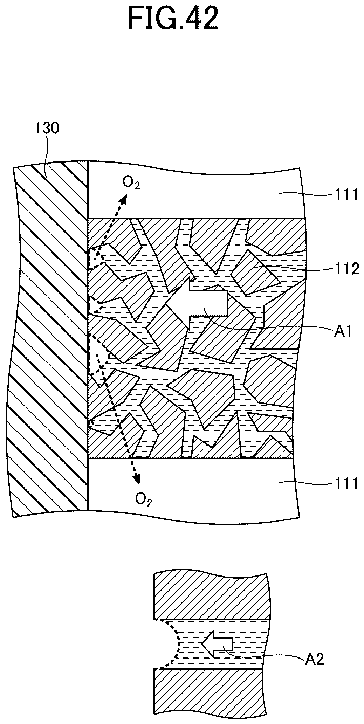

The water electrolysis device 100 according to the first embodiment will be explained. Fig. 39 is a perspective view of the water electrolysis device 100 according to the first embodiment. Fig. 40 is an exploded perspective view of the water electrolysis device 100 according to the first embodiment. Figs. 41 and 42 are drawings explaining the operation of the water electrolysis device 100 according to the first embodiment. Specifically, Figs. 41 and 42 are diagrams explaining the details around the interface with the solid electrolyte membrane 130.

The water electrolysis device 100 generates a gas from the supplied water (pure water) at an anode, or a cathode, or both. For example, oxygen is generated at the anode of the water electrolysis device 100. Hydrogen is generated at the cathode of the water electrolysis device 100. The anode 110, the cathode 120, and a solid electrolyte membrane 130 are disposed in a housing 100a. In the water electrolysis device 100, the anode 110 and the cathode 120 are separated from each other by the solid electrolyte membrane 130. The solid electrolyte membrane 130 includes an anode catalytic membrane 131, a cathode catalytic membrane 132, and a separation membrane 133.

The anode 110 is in contact with the solid electrolyte membrane 130. The anode 110 is formed of a porous body through which a gas or a liquid can be passed through. For example, the anode 110 is formed by gold-plating a sintered body of titanium. Grooves 111 are formed in a surface (front surface) of the anode 110 in contact with the solid electrolyte membrane 130.

A water chamber 101, to which water is supplied, is disposed on the opposite side of the anode 110 to the solid electrolyte membrane 130. Pure water is supplied to the water chamber 101 from a water supply pipe 101a. Moreover, water is discharged from the water chamber 101 through a water discharge pipe 101b. Specifically, part of or a whole of the back surface of the anode 110 facing the solid electrolyte membrane 130 is in contact with water supplied to the water chamber 101. The pure water supplied to the water chamber 101 permeates into the anode 110, which is a porous body, from the back surface of the anode 110.

As illustrated in Fig. 42, the anode 110 is a hydrophilic porous body, and therefore the water in contact with the back surface of the anode 110 moves in the direction of the arrow A1 by capillary force to permeate through the anode 110. The water permeating the anode 110 is passed through the anode 110 to reach the surface of the anode 110 facing the solid electrolyte membrane 130.

The water reaching the contact interface between the anode 110 and the solid electrolyte membrane 130 is electrolyzed to generate oxygen. As illustrated in Fig. 42, the oxygen generated at the contact interface is released from the contact interface to grooves 111. As illustrated in the bottom view of Fig. 42, the gas (oxygen) does not flow backward in the pores, and water is supplied in the direction of the arrow A2.

The oxygen generated at the contact interface between the solid electrolyte membrane 130 and the anode 110 is discharged to any of the grooves 111. Then, the oxygen generated at the contact interface between the solid electrolyte membrane 130 and the anode 110 is collected in the grooves 111. Then, the oxygen is guided along the grooves 111 and is discharged from each of the grooves 111 to the oxygen gas chamber 103. The oxygen collected in the oxygen gas chamber 103 is discharged through the oxygen discharge pipe 103a communicating with the oxygen gas chamber 103.

The cathode 120 is in contact with the solid electrolyte membrane 130. The cathode 120 is formed of a porous body through which a gas or a liquid can be passed through. For example, the cathode 120 is formed of carbon. Grooves 121 are formed in the surface of the cathode 120 in contact with the solid electrolyte membrane 130.

Hydrogen is generated at an interface between the cathode 120 and the solid electrolyte membrane 130. The generated hydrogen is collected in a hydrogen chamber 102, and is discharged through a hydrogen discharge pipe 102a.

<Second embodiment>

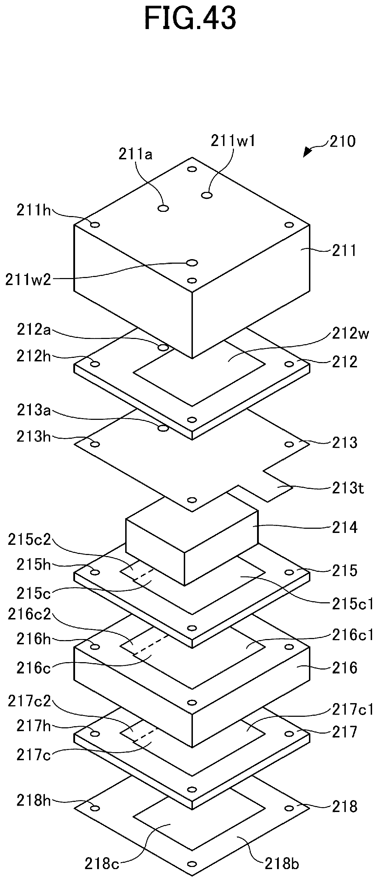

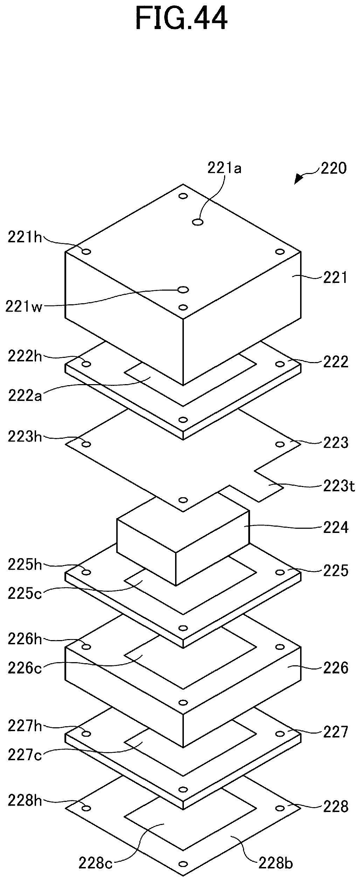

The water electrolysis cell having a basic structure of a single electrode set has been explained through the water electrolysis device 100 according to the first embodiment. As the water electrolysis device according to a second embodiment, an embodiment where the water electrolysis cell having a stack structure in which a plurality of electrode sets can be stacked will be explained. Fig. 43 is an exploded perspective view of the anode stack 210 of the water electrolysis device according to the second embodiment. Fig. 44 is an exploded perspective view of the cathode stack 220 of the water electrolysis device according to the second embodiment.

[Anode stack 210]

The anode stack 210 of the water electrolysis device according to the second embodiment includes a first case 211, a first gasket 212, an extraction electrode 213, a current collector 214, a second gasket 215, a second case 216, a third gasket 217, and a separator 218.

(First case 211)

The first case 211 receives water supplied from outside, and discharges oxygen generated inside the anode stack. The first case 211 has a water discharge hole 211w1, a water supply hole 211w2, and an oxygen discharge hole 211a, which go through from the outside to the inside of the first case 211.

The water supplied from the water supply hole 211w2 passes through the extraction electrode 213 and is then supplied to the current collector 214. Moreover, part of the water supplied from the water supply hole 211w2 is discharged through the water discharge hole 211w1. The oxygen generated inside the anode stack 210 is discharged through the oxygen discharge hole 211a.

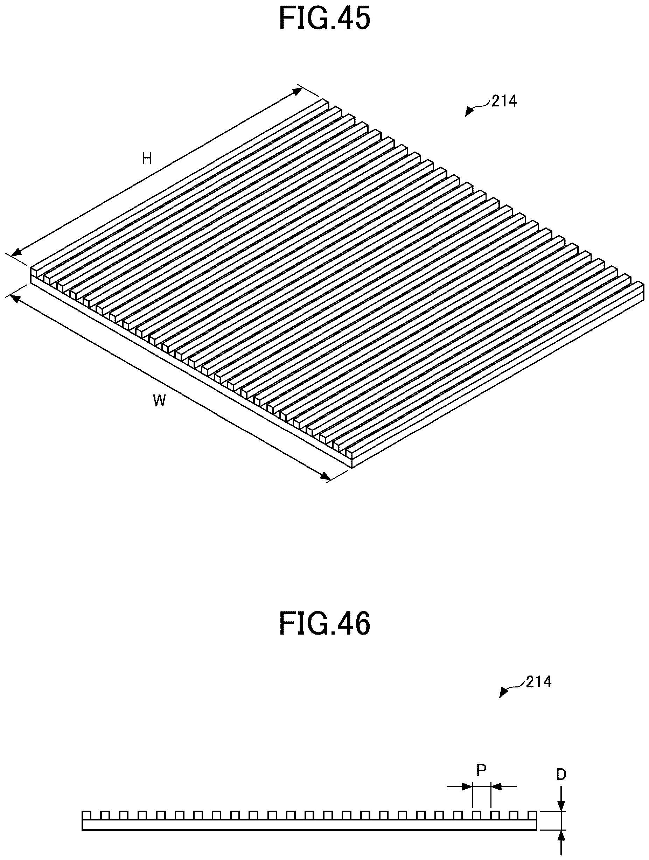

For example, the first case 211 is formed of acrylic. For example, the first case 211 has a square shape of 80 mm $\times$ 80 mm in a plan view. Moreover, the first case 211 has through holes 211h at four corners thereof, where rod members for assembling the anode stack 210 are passed through the through holes 211h when the water electrolysis device is assembled. Note that, a view of the first case 211 from the top side of Fig. 44 may be referred to as a plan view hereinafter. The same applies to FIG. 45.

(First gasket 212)

The first gasket 212 prevents leakage of water or oxygen at the interface between the first case 211 and the extraction electrode 213. The first gasket 212 has an opening 212w through which the water from the first case 211 is passed, and an opening 212a through which oxygen is passed.

The water supplied from the first case 211 passes the opening 212w to permeate through the extraction electrode 213, and is then supplied to the current collector 214. Moreover, oxygen generated inside the anode stack 210 is passed through the opening 212a, and is discharged from the oxygen discharge hole 211a of the first case 211.

For example, the first gasket 212 is formed of transparent rubber. For example, the first gasket 212 has a square shape of 80 mm $\times$ 80 mm in a plan view. Moreover, the first gasket 212 has through holes 212h at four corners thereof, where rod members for assembling the anode stack 210 are passed through the through holes 212h when the water electrolysis device is assembled.

(Extraction electrode 213)

The extraction electrode 213 supplies electricity from an external power source to the current collector 214. Moreover, the extraction electrode 213 supplies water, which is supplied from the first case 211, to the current collector 214. The extraction electrode 213 is formed of a net-like conductor. The extraction electrode 213 has an opening 213a through which oxygen is passed through.

The water supplied from the first case 211 permeates through the extraction electrode 213, which is formed of the net-like conductor, and is then supplied to the current collector 214. Moreover, the oxygen generated inside the anode stack 210 is passed through the opening 213a and is discharged toward the first case 211 side.

For example, the extraction electrode 213 has a square shape of 80 mm $\times$ 80 mm in a plan view. Moreover, an extraction terminal 213t is disposed on one side of the square shape of the extraction electrode 213. An external power source is coupled to the extraction terminal 213t. Further, the extraction electrode 213 has through holes 213h at four corners thereof, where rod members for assembling the anode stack 210 are passed through the through holes 213h when the water electrolysis device is assembled.

(Current collector 214)

The current collector 214 supplies electricity from an external power source to the separator 218 including the solid electrolyte membrane. Moreover, the current collector 214 supplies water, which is supplied from the first case 211, to the separator 218. The current collector 214 is formed of a porous body.

The water supplied from the first case 211 permeates through the current collector 214, which is a porous body, and is supplied to the separator 218. Moreover, oxygen generated at the interface between the current collector 214 and the separator 218 is discharged to grooves formed in the current collector 214. The oxygen released into the water formed in the current collector 214 is discharged from the lateral side of the current collector 214. The oxygen discharged from the lateral side of the current collector 214 is passed through the opening 213a, and is then discharged toward the first case 211.

For example, the current collector 214 has a rectangular shape of 40 mm $\times$ 50 mm in a plan view.

The current collector 214 is inserted into a first portion 215c1 of the opening 215c of the second gasket 215, a first portion 216c1 of the opening 216c of the second case 216, and a first portion 217c1 of the opening 217c of the third gasket 217.

Fig. 45 is a perspective view of the anode current collector 214 of the water electrolysis device according to the second embodiment. Fig. 46 is a side view of the anode current collector 214 of the water electrolysis device according to the second embodiment. The current collector 214 has a plate shape having a size of a height H $\times$ a width W $\times$ and a thickness D. For example, the height H is 40 mm, the width W is 50 mm, and the thickness D is 2 mm. Grooves are formed in one surface of the current collector 214 at a pitch P. For example, the pitch P is 2 mm.

(Second gasket 215)

The second gasket 215 prevents the leakage of water or oxygen at the interface between the extraction electrode 213 and the second case 216. Moreover, the second gasket 215 has an opening 215c. The opening 215c has a first portion 215c1 having the substantially same outer shape as that of the current collector 214 in a plan view, and a second portion 215c2 disposed in the vicinity of the first portion 215c1.

The current collector 214 is inserted into the first portion 215c1. The oxygen generated at the interface between the current collector 214 and the separator 218 is passed through the second portion 215c2.

For example, the second gasket 215 is formed of transparent rubber. For example, the second gasket 215 has a square shape of 80 mm $\times$ 80 mm in a plan view. Moreover, the second gasket 215 has through holes 215h at four corners thereof, where rod members for assembling the anode stack 210 are passed through the through holes 215h when the water electrolysis device is assembled.

(Second case 216)

The second case 216 retains the current collector 214 therein, and also discharges the oxygen generated therein to the outside of the second case 216. The second case 216 has an opening 216c. The opening 216c has a first portion 216c1 having the substantially same outer shape as that of the current collector 214 in a plan view, and a second portion 216c2 disposed in the vicinity of the first portion 216c1.

The current collector 214 is inserted into the first portion 216c1. The oxygen generated at the interface between the current collector 214 and the separator 218 is passed through the second portion 216c2.

For example, the second case 216 is formed of acrylic. For example, the second case 216 has a square shape of 80 mm × 80 mm in a plan view. Moreover, the second case 216 has through holes 216h at four corners thereof, where rod members for assembling the anode stack 210 are passed through the through holes 216h when the water electrolysis device is assembled.

(Third gasket 217)

The third gasket 217 prevents leakage of water or oxygen at the interface between the second case 216 and the separator 218. Moreover, the third gasket 217 has an opening 217c. The opening 217c has a first portion 217c1 having the substantially same shape as that of the current collector 214 in a plan view, and a second portion 217c2 disposed in the vicinity of the first portion 217c1.

The current collector 214 is inserted into the first portion 217c1. The oxygen generated at the interface between the current collector 214 and the separator 218 is passed through the second portion 217c2.

For example, the third gasket 217 is formed of transparent rubber. For example, the third gasket 217 has a square shape of 80 mm × 80 mm in a plan view. Moreover, the third gasket 217 has through holes 217h at four corners thereof, where rod members for assembling the anode stack 210 are passed through the through holes 217h when the water electrolysis device is assembled.

(Separator 218)

The separator 218 separates an anode and a cathode from each other. The separator 218 includes a substrate 218b and an electrolyte membrane 218c formed on the substrate 218b.

The electrolyte membrane 218c is in contact with the current collector 214. Oxygen is generated at the interface between the electrolyte membrane 218c and the current collector 214. The oxygen generated at the interface is discharged toward the second portion 216c2 of the opening 216c of the second case 216 through the grooves formed in the current collector 214.

For example, the substrate 218b of the separator 218 is formed of a resin. For example, the substrate 218b of the separator 218 has a square shape of 80 mm × 80 mm in a plan view. Moreover, the substrate 218b of the separator 218 has through holes 218h at four corners thereof, where rod members for assembling the anode stack 210 are passed through the through holes 218h when the water electrolysis device is assembled.

[Cathode stack 220]

The cathode stack 220 of the water electrolysis device according to the second embodiment includes a first case 221, a first gasket 222, an extraction electrode 223, a current collector 224, a second gasket 225, a second case 226, a third gasket 227, and a separator 228.

(First case 221)

The first case 221 discharges water discharged from inside the cathode stack, and also discharges hydrogen generated inside the cathode stack to the outside. The first case 221 has a water discharge hole 221w and a hydrogen discharge hole 221a, which go through from the outside to the inside of the first case 221.

The water discharged from the inside of the cathode stack 220 passes through the extraction electrode 223, and is discharged from the water discharge hole 221w. The hydrogen generated inside the cathode stack 220 is discharged from the hydrogen discharge hole 221a.

For example, the first case 221 is formed of acrylic. For example, the first case 221 has a square shape of 80 mm × 80 mm in a plan view. Moreover, the first case 221 has through holes 221h at four corners thereof, where rod members for assembling the cathode stack 220 are passed through the through holes 221h when the water electrolysis device is assembled.

(First gasket 222)

The first gasket 222 prevents the leakage of water or hydrogen at the interface between the first case 221 and the extraction electrode 223. The first gasket 222 has an opening 222a through which water and hydrogen are passed through.

The water generated inside the cathode stack 220 is passed through the opening 222a and is transported to the first case 221. Moreover, the hydrogen generated inside the cathode stack 220 is passed through the opening 222a, and is discharged from the hydrogen discharge hole 221a of the first case 221.

For example, the first gasket 222 is formed of transparent rubber. For example, the first gasket 222 has a square shape of 80 mm × 80 mm in a plan view. Moreover, the first gasket 222 has through holes 222h at four corners thereof, where rod members for assembling the cathode stack 220 are passed through the through holes 222h when the water electrolysis device is assembled.

(Extraction electrode 223)

The extraction electrode 223 supplies electricity from the external power source to the current collector 224. Moreover, the extraction electrode 223 discharges the water discharged from the inside of the cathode stack 220. The extraction electrode 223 is formed of a net-like conductor.

The water discharged from the inside of the cathode stack 220 is passed through the extraction electrode 223 formed of a net-like conductor, and is sent to first case 221. Moreover, the hydrogen generated inside of the cathode stack 220 is passed through the extraction electrode 223 formed of the net-like conductor, and is discharged toward the first case 221.

For example, the extraction electrode 223 has a square shape of 80 mm × 80 mm in a plan view. Moreover, an extraction terminal 223t is disposed on one side of the square shape of the extraction electrode 223. An external power source is coupled to the extraction terminal 223t. Further, the extraction electrode 223 has through holes 223h at four corners thereof, where rod members for assembling the cathode stack 220 are passed through the through holes 223h when the water electrolysis device is assembled.

(Current collector 224)

The current collector 224 supplies electricity from an external power source to the separator 228 including the solid electrolyte membrane. Moreover, the current collector 224 sends the water discharged from the separator 228 to the first case 221. The current collector 224 is formed of a porous body.

The water discharged from the separator 228 is passed through the current collector 224, which is a porous body, and is sent toward the first case 221. Moreover, the hydrogen generated at the interface between the current collector 224 and the separator 228 is passed through the current collector 224 and is sent toward the extraction electrode 223.

For example, the current collector 224 has a rectangular shape of 40 mm × 50 mm in a plan view.

The current collector 224 is inserted into the opening 225c of the second gasket 225, the opening 226c of the second case 226, and the opening 227c of the third gasket 227.

(Second gasket 225)

The second gasket 225 prevents leakage of water or hydrogen at the interface between the extraction electrode 223 and the second case 226. Moreover, the second gasket 225 has an opening 225c. The current collector 224 is inserted into the opening 225c.

For example, the second gasket 225 is formed of transparent rubber. For example, the second gasket 225 has a square shape of 80 mm × 80 mm in a plan view. Moreover, the second gasket 225 has through holes 225h at four corners thereof, where rod members for assembling the cathode stack 220 are passed through the through holes 225h when the water electrolysis device is assembled.

(Second case 226)

The second case 226 retains the current collector 224 therein. The second case 226 has an opening 226c. The opening 226c has the substantially same outer shape as that of the current collector 224 in a plan view. The current collector 224 is inserted into the opening 226c.

For example, the second case 226 is formed of acrylic. For example, the second case 226 has a square shape of 80 mm × 80 mm in a plan view. Moreover, the second case 226 has through holes 226h at four corners thereof, where rod members for assembling the cathode stack 220 are passed through the through holes 226h when the water electrolysis device is assembled.

(Third gasket 227)

The third gasket 227 prevents leakage of water or hydrogen at the interface between the second case 226 and the separator 228. Moreover, the third gasket 227 has an opening 227c. The current collector 224 is inserted into the opening 227c.

For example, the third gasket 227 is formed of transparent rubber. For example, the third gasket 227 has a square shape of 80 mm × 80 mm in a plan view. Moreover, the third gasket 227 has through holes 227h at four corners thereof, where rod members for assembling the cathode stack 220 are passed through the through holes 227h when the water electrolysis device is assembled.

(Separator 228)

The separator 228 separates an anode and a cathode from each other. The separator 228 includes a substrate 228b and an electrolyte membrane 228c formed on the substrate 228b.

The current collector 224 is in contact with the electrolyte membrane 228c. Hydrogen is generated at the interface between the electrolyte membrane 228c and the current collector 224. The hydrogen generated at the interface is passed through the current collector 224 and is discharged toward the first case 221 side.

For example, the substrate 228b of the separator 228 is formed of a resin. For example, the substrate 228b of the separator 228 has a square shape of 80 mm × 80 mm in a plan view. Moreover, the substrate 228b of the separator 228 has through holes 228h at four corners thereof, where rod members for assembling the cathode stack 220 are passed through the through holes 228h when the water electrolysis device is assembled.

<Third embodiment>

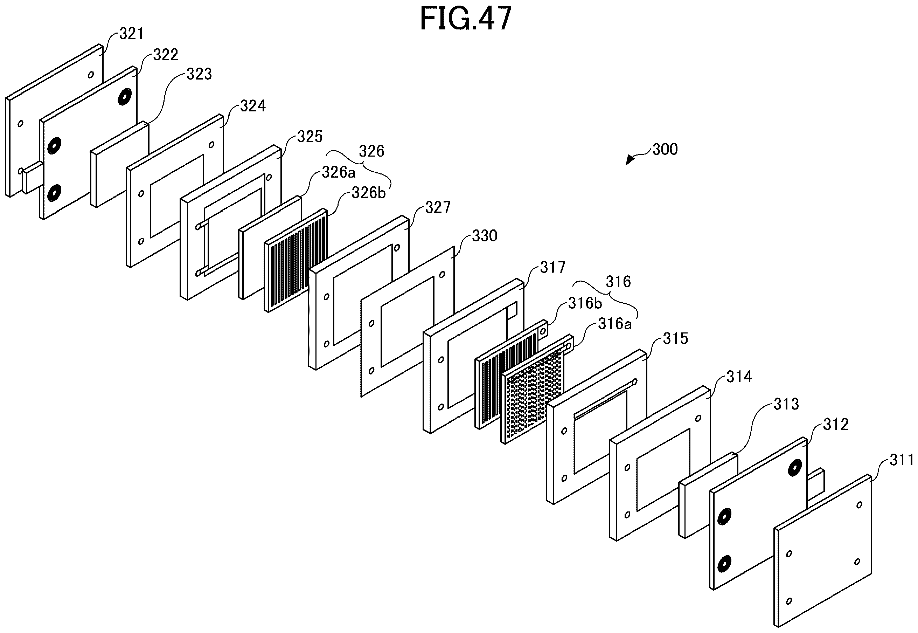

As the water electrolysis device according to the third embodiment, an embodiment where the water electrolysis cell 300 having a stack structure in which electrode sets can be stacked will be explained. Fig. 47 is an exploded perspective view of the water electrolysis cell 300 used in the water electrolysis device according to the third embodiment.

The water electrolysis cell 300 of the water electrolysis device according to the third embodiment includes an electrolyte membrane 330. The water electrolysis cell 300 includes an insulation plate 311, an electrode plate 312, a leaf spring 313, a first gasket 314, a water channel case 315, a current collector 316, and a second gasket 317 on the anode side of the electrolyte membrane 330 in the order from the outside. Moreover, the water electrolysis cell 300 of the water electrolysis device according to the third embodiment includes an insulation plate 321, an electrode plate 322, a leaf spring 323, a first gasket 324, a hydrogen channel case 325, a current collector 326, and a second gasket 327 on the cathode side of the electrolyte membrane 330 in the order from the outside.

The anode side of the electrolyte membrane 330 of the water electrolysis cell 300 will be explained in the order from the outer side. The insulation plate 311 constitutes the outermost surface of the water electrolysis cell 300. The electrode plate 312 is supplied with power from the outside. The leaf spring 313 presses the current collector 316 to the electrolyte membrane 330 from the insulation plate 311 side. Moreover, the leaf spring 313 supplies electricity from the electrode plate 312 to the current collector 316. The first gasket 314 prevents leakage of water or oxygen at the interface between the electrode plate 312 and the water channel case 315. The water channel case 315 supplies water to the current collector 316 from the outside.

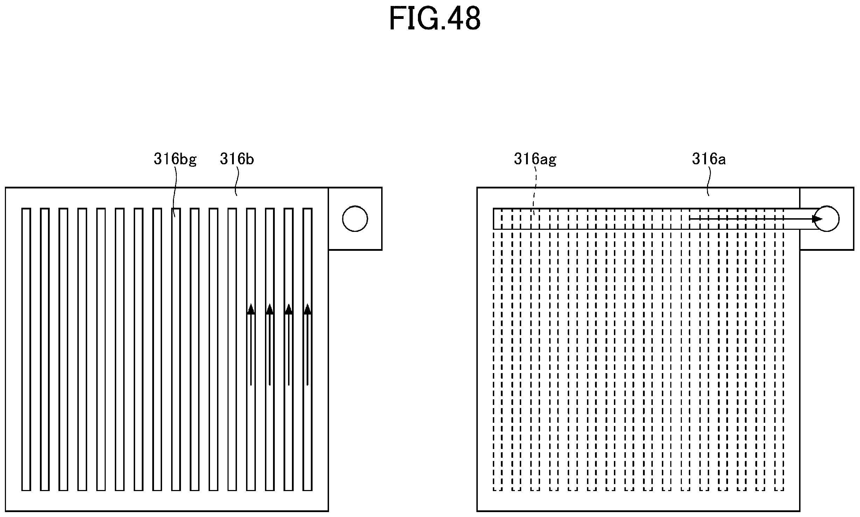

The current collector 316 includes a first member 316a and a second member 316b. Fig. 48 is a front view of the first member 316a and the second member 316b, which are disassembled from the anode current collector 316 of the water electrolysis device according to the third embodiment. The first member 316a and the second member 316b are arranged to be in close contact with each other. A groove 361ag extending in the lateral direction is disposed on the upper side of the first member 316a. Grooves 316bg extending in the longitudinal direction are disposed on the second member 316b.

Each of the first member 316a and the second member 316b constituting the current collector 316 is formed of a conductive porous body. For example, each of the first member 316a and the second member 316b is formed of a titanium nonwoven fabric. Since each of the first member 316a and the second member 316b is formed of a conductive porous body, water supplied from the water channel case 315 is passed through both the first member 316a and the second member 316b. The water passed through both the first member 316a and the second member 316b is supplied to the electrolyte membrane 330.

The water supplied to the electrolyte membrane 330 is subjected to water electrolysis using electricity supplied to the current collector 316. Oxygen generated at an interface between the current collector 316 and the electrolyte membrane 330 by the water electrolysis travels through each of grooves 316bg of the second member 316b of the current collector 316, and is then collected to the groove 316ag of the first member 316a. The oxygen collected in the groove 316ag of the first member 316a is discharged to the outside of the water electrolysis cell 300.

The cathode side of the electrolyte membrane 330 of the water electrolysis cell 300 will be explained in the order from the outer side. The insulation plate 321 constitutes the outermost surface of the water electrolysis cell 300. The electrode plate 322 is supplied with power from the outside. The leaf spring 323 presses the current collector 326 to the electrolyte membrane 330 from the insulation plate 321 side. Moreover, the leaf spring 323 supplies the electricity from the electrode plate 322 to the current collector 326. The first gasket 324 prevents the leakage of water or oxygen at the interface between the electrode plate 322 and the hydrogen channel case 325. The hydrogen channel case 325 recovers hydrogen generated at the water electrolysis cell 300.

The current collector 326 includes a first member 326a and a second member 326b. The first member 326a has the same shape as that of the first member 316a of the current collector 316. The second member 326b has the same shape as that of the second member 315b of the current collector 316.

The first member 326a and second member 326b constituting the current collector 326 are each formed of a conductive porous body. For example, each of the first member 326a and the second member 326b is formed of a carbon nonwoven fabric. Since each of the first member 326a and the second member 326b is formed of a conductive porous body, hydrogen generated at the interface between the current collector 326 and the electrolyte membrane 330 is passed through both the first member 326a and the second member 326b. The hydrogen passed through the both first member 326a and the second member 326b is recovered in the hydrogen channel case 325.

<Fourth embodiment>

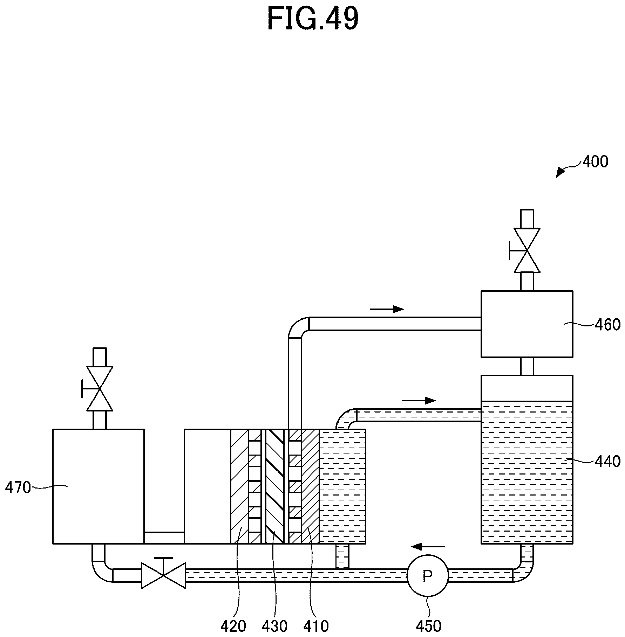

The water electrolysis device 400 according to the fourth embodiment will be explained. Fig. 49 is a schematic configuration diagram of the water electrolysis device 400 according to the fourth embodiment.

The water electrolysis device 400 includes an anode 410, a cathode 420, and an electrolyte membrane 430. Moreover, the water electrolysis device 400 includes a water tank 440, a pump 450, an oxygen tank 460, and a hydrogen tank 470.

Water is supplied to the anode 410 from the water tank 440 by the pump 450. Part of the water supplied to the anode 410 is again returned back to the water tank 440. Moreover, oxygen generated at the anode 410 is stored in the oxygen tank 460. As described above, grooves are formed in the current collector of the anode 410. The grooves formed in the current collector can facilitate efficient separation of oxygen from the anode. Hydrogen generated at the cathode 420 is stored in the hydrogen tank 470.

<Fifth embodiment>

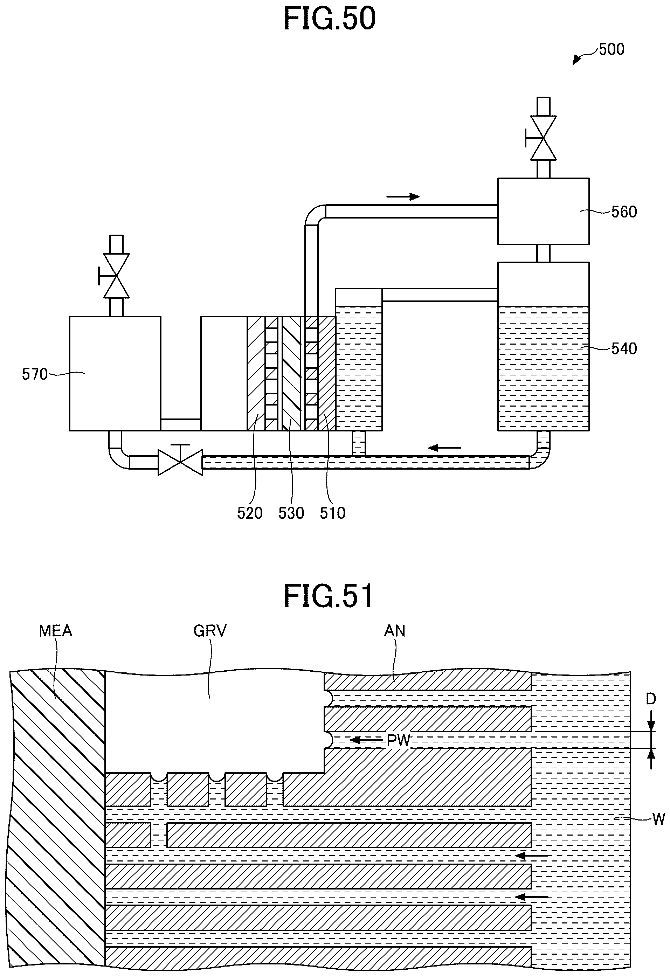

The water electrolysis device 500 according to the fifth embodiment will be explained. Fig. 50 is a schematic configuration diagram of the water electrolysis device 500 according to the fifth embodiment. The water electrolysis device 500 has a configuration where the pump 450 is not used in the water electrolysis device 400.

The water electrolysis device 500 includes an anode 510, a cathode 520, and an electrolyte membrane 530. Moreover, the water electrolysis device 500 includes a water tank 540, an oxygen tank 560, and a hydrogen tank 570.

Water is supplied to the anode 510 from the water tank 540. The anode 510 is composed of a current collector that is a porous body. The water is supplied to the anode 510 through natural circulation by the capillary force of the current collector, which is a porous body. Moreover, oxygen generated at the anode 510 is stored in the oxygen tank 560. As described above, grooves are formed in the current collector of the anode 510. The grooves formed in the current collector can facilitate efficient separation of oxygen from the anode. Hydrogen generated at the cathode 520 is stored in the hydrogen tank 570.

<Behavior of water collecting device of the present embodiment>

The behavior of the water collecting device according to the present embodiment will be explained. Fig. 51 is a diagram explaining the behavior of the water electrolysis device according to the present embodiment.

A film of surface tension is formed at an interface between the water inside the current collector AN and the oxygen in the groove GRV. When a diameter D of a pore of the current collector AN is 20 $\mu$m, for example, the oxygen does not penetrate into the current collector AN, if the pressure PW inside the groove GRV is 14 kPa or lower. The groove GRV is continued from the oxygen chamber to the discharge pipe and the oxygen tank. Since the pressure in the oxygen tank is ambient pressure, the pressure in the groove is maintained at a low pressure. Therefore, the oxygen does not penetrate into the current collector AN.

As a result of water electrolysis of water, oxygen bubbles are generated between the electrolyte membrane MEA and the current collector AN. The pressure of the generated bubbles is very high. The bubbles generated at the interface enter pores of the current collector AN in the vicinity. As the bubbles enter a pore, viscous resistance is generated inside the pore.

For example, in a case where oxygen is passed through toward a back surface of a titanium nonwoven fabric having a thickness of 2 mm, flow resistance of 0.16 kPa is generated to push out water. Conversely, in a case where oxygen is passed through toward the groove GRV of the current collector AN, for example, flow resistance to push out water for a length of 0.5 mm is 0.04 kPa. Therefore, the generated bubbles escape to the groove GRV side where the pressure loss is small.

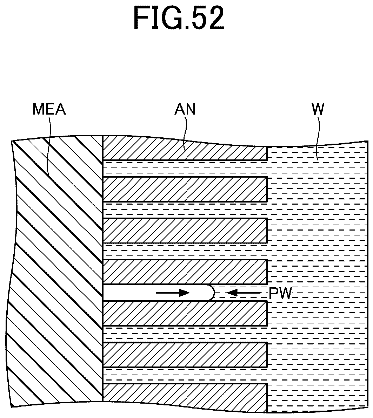

Next, a case where the groove GRV is not disposed will be discussed. Fig. 52 is a diagram explaining the behavior of the water electrolysis device of Comparative Example.

In the case where the groove GRV is not disposed, oxygen bubbles generated at the interface between the electrolyte membrane MEA and the current collector AN enter pores of the current collector AN in the vicinity. When a diameter of each pore is, for example, 20 um, a gas-liquid interface is formed within a passage of each pore to generate surface tension according to a pore diameter of the porous body. The pore size of 20 um results in the surface tension of 14 kPa.

In order for the oxygen bubbles at the interface to move toward the opposite surface of the current collector AN, the pressure of the oxygen bubbles needs to exceed the above surface tension and the flow resistance for pushing out the water in the pores. When the length of the passage of each pore is, for example, 0.3 mm, the flow resistance calculated from the amount of oxygen generated per unit time is 0.024 kPa.

Although the embodiments have been described, it will be understood that various changes may be made in forms and details of the above embodiments without departing from the spirit and scope of the claims. Various modifications and improvements such as combinations with or substitutions of a part or all of the other embodiments are possible.

Description of Symbols

1, 2, 3, 4, 5 water collecting device
10 water-vapor generator
20 water-vapor recovery part
50 gas supply and recovery part
61, 71 heating part
62, 72 cooling part
63 water-vapor supply part
64, 74 water storage
65, 75 gas supply part
66, 76 compressor
67, 77a, 77b blower
68, 78 expansion valve
80, 180 rover
100 water electrolysis device

110 anode
111 groove
210 anode stack
214 current collector
300 water electrolysis cell
316 current collector
316b second member
316bg groove
400, 500 water electrolysis device

**Claims**

1. A water collecting device comprising:

   an ice-wall forming part configured to heat the ground to form an ice wall with ice that includes moisture in the ground; and
   a water collecting part configured to recover a first gas within a region surrounded by the ice wall and collect water from the first gas recovered.

2. The water collecting device according to claim 1, wherein the ice-wall forming part includes a heater that is inserted into the ground to heat the ground.

3. The water collecting device according to claim 1, wherein the ice-wall forming part includes a heating part configured to heat a second gas to be supplied into the ground.

4. The water collecting device according to claim 1, wherein the ice-wall forming part includes a water-vapor generator configured to generate water vapor to be supplied into the ground.

5. The water collecting device according to any one of claims 1 to 4,

   wherein the water collecting part includes
   a condenser configured to condense moisture in the first gas to generate the water, and
   a tank configured to recover the water condensed by the condenser.

6. A water collecting method comprising:

   heating the ground to form an ice wall with ice that includes moisture in the ground; and
   recovering a first gas within a region surrounded by the ice wall and collecting water from the first gas recovered.

7. A water electrolysis device comprising:

   an anode;
   a solid electrolyte membrane; and

a cathode,

   wherein the anode is a current collector in contact with the solid electrolyte membrane,
   the current collector is a hydrophilic porous body that allows a gas or a liquid to pass through, and has a front surface and a back surface, where the front surface of the current collector has grooves and is in contact with the solid electrolyte membrane,
   water is supplied to the back surface of the current collector from the water collecting device according to any one of claims 1 to 5, and the back surface is an opposite side to the front surface that is in contact with the solid electrolyte membrane, and
   the water permeates from the back surface to the front surface by capillary force, and oxygen generated at the front surface is discharged to the grooves.

# FIG.1

# FIG.2

- 10a
- W1
- 11
- Close
- GL
- SP1
- RGL

# FIG.3

20a

WCD1

21

Close

GL    SP1    RGL

# FIG.4

DRL

GL          SP0                    RGL

# FIG.5

31

GL      RA      SP1              RGL

# FIG.6

RGL    SP1

EMP

RGP    ICE

# FIG.7

31

GL    RA    SP1    RGL

# FIG.8

# FIG.9

# FIG.10

RGL  SP1

EMP

ICE

RGP  ICL  WTR  VP1

# FIG.11

31

GL  RA  SP1  RGL

# FIG.12

# FIG.13

# FIG.14

41

RGL

RHA

IW    IWh

# FIG.15

41

RGL

RHA

IW

# FIG.16

# FIG.17

# FIG.18

# FIG.19

# FIG.20

# FIG.21

EP 4 474 614 A1

**FIG.22**

FIG.23

# FIG.24

EP 4 474 614 A1

FIG.25

(a) DRL

(b) SLV

(c) HTR

(d)

(e) IW

(f) IW

# FIG.26

# FIG.27

EP 4 474 614 A1

# FIG.28

# FIG.29

# FIG.30

# FIG.31

# FIG.32

# FIG.33

# FIG.34

# FIG.35

# FIG.36

# FIG.37

# FIG.38

# FIG.39

# FIG.40

# FIG.41

# FIG.42

# FIG.43

# FIG.44

# FIG.45

# FIG.46

FIG.47

300

311
312
313
314
315
316
316b
316a
317
330
327
326
326a
326b
325
324
323
322
321

FIG.48

316bg  316b

316ag  316a

EP 4 474 614 A1

# FIG.49

# FIG.50

500

560

540

570

520  530  510

# FIG.51

MEA    GRV    AN

D

PW

W

# FIG.52

## INTERNATIONAL SEARCH REPORT

| International application No. |
|---|
| **PCT/JP2022/003702** |

**A.    CLASSIFICATION OF SUBJECT MATTER**

*E21C 51/00*(2006.01)i
FI:   E21C51/00

According to International Patent Classification (IPC) or to both national classification and IPC

**B.    FIELDS SEARCHED**

Minimum documentation searched (classification system followed by classification symbols)

E21C25/00-51/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | JP 2019-148155 A (SHIMIZU CORPORATION) 05 September 2019 (2019-09-05) paragraphs [0006]-[0047], fig. 1-3 | 1-6 |
| Y | paragraphs [0006]-[0047], fig. 1-3 | 7 |
| Y | JP 03-177592 A (MITSUBISHI HEAVY IND., LIMITED, JAPAN STORAGE BATTERY COMPANY, LIMITED) 01 August 1991 (1991-08-01) page 2, upper left column, line 7 to upper right column, line 2 | 7 |
| Y | JP 2018-032557 A (SHARP CORPORATION) 01 March 2018 (2018-03-01) paragraphs [0029]-[0141], fig. 18 | 7 |
| A | JP 2011-140022 A (HAMILTON SUNDSTRAND CORPORATION) 21 July 2011 (2011-07-21) | 1-7 |
| A | US 2019/0271228 A1 (COLORADO SCHOOL OF MINES) 05 September 2019 (2019-09-05) | 1-7 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **07 March 2022** | **22 March 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2022/003702**

| Patent document cited in search report | | | Publication date (day/month/year) | Patent family member(s) | | | Publication date (day/month/year) |
|---|---|---|---|---|---|---|---|
| JP | 2019-148155 | A | 05 September 2019 | (Family: none) | | | |
| JP | 03-177592 | A | 01 August 1991 | (Family: none) | | | |
| JP | 2018-032557 | A | 01 March 2018 | (Family: none) | | | |
| JP | 2011-140022 | A | 21 July 2011 | US | 2011/0168164 | A1 | |
| US | 2019/0271228 | A1 | 05 September 2019 | (Family: none) | | | |

Form PCT/ISA/210 (patent family annex) (January 2015)

**EP 4 474 614 A1**

**Patent documents cited in the description**

- JP 2019148155 A